(19) **Europäisches Patentamt / European Patent Office / Office européen des brevets**

(11) **EP 3 937 405 B1**

(12) # EUROPEAN PATENT SPECIFICATION

(45) Date of publication and mention
of the grant of the patent:
**29.07.2026 Bulletin 2026/31**

(21) Application number: **20784749.2**

(22) Date of filing: **30.03.2020**

(51) International Patent Classification (IPC):
**H04L 1/18** *(2023.01)*     **H04W 72/04** *(2023.01)*

(52) Cooperative Patent Classification (CPC):
**H04L 1/1854; H04L 1/1812; H04L 1/1861;
H04L 1/1887; H04L 5/0044; H04L 5/0055;
H04L 5/001**

(86) International application number:
**PCT/CN2020/082049**

(87) International publication number:
**WO 2020/200162 (08.10.2020 Gazette 2020/41)**

(54) **FEEDBACK INFORMATION DETERMINING METHOD AND COMMUNICATION APPARATUS**

VERFAHREN ZUR BESTIMMUNG VON RÜCKKOPPLUNGSINFORMATIONEN UND
KOMMUNIKATIONSVORRICHTUNG

PROCÉDÉ DE DÉTERMINATION D'INFORMATIONS DE RETOUR ET APPAREIL DE
COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2019 CN 201910254126**

(43) Date of publication of application:
**12.01.2022 Bulletin 2022/02**

(73) Proprietor: **HUAWEI TECHNOLOGIES CO., LTD.
Shenzhen, Guangdong 518129 (CN)**

(72) Inventors:
• **MA, Ruixiang**
  **Shenzhen, Guangdong 518129 (CN)**
• **GUAN, Lei**
  **Shenzhen, Guangdong 518129 (CN)**
• **SHAO, Jiafeng**
  **Shenzhen, Guangdong 518129 (CN)**

(74) Representative: **Maiwald GmbH
Elisenhof
Elisenstraße 3
80335 München (DE)**

(56) References cited:
CN-A- 103 210 604     CN-A- 107 925 523
CN-A- 109 075 914     US-A1- 2015 195 072
US-A1- 2016 212 734   US-A1- 2016 278 075

• OPPO: "Remaining details on HARQ-ACK
  transmission", vol. RAN WG1, no. Busan, Korea;
  20180521 - 20180525, 20 May 2018 (2018-05-20),
  XP051442038, Retrieved from the Internet
  <URL:http://www.3gpp.org/ftp/Meetings%
  5F3GPP%5FSYNC/RAN1/Docs/> [retrieved on
  20180520]
• LG ELECTRONICS: "Remaining issues on CA
  and HARQ-ACK codebook", vol. RAN WG1, no.
  Busan, Korea; 20180521 - 20180525, 12 May 2018
  (2018-05-12), XP051462670, Retrieved from the
  Internet <URL:http://www.3gpp.org/ftp/tsg%
  5Fran/WG1%5FRL1/TSGR1%5F93/Docs>
  [retrieved on 20180512]
• SHARP: "Remaining issues on HARQ-ACK of
  SPS PDSCH release", vol. RAN WG1, no.
  Spokane, US; 20181112 - 20181116, 11 November
  2018 (2018-11-11), XP051555203, Retrieved from
  the Internet <URL:http://www.3gpp.org/ftp/
  Meetings%5F3GPP%5FSYNC/RAN1/Docs/R1%
  2D1813202%2Ezip> [retrieved on 20181111]

**(Cont. next page)**

- **CATT: "Corrections to CA and BWP operation", 3GPP TSG RAN WG1 MEETING #95, DISCUSSION_R1-1812606, 3 November 2018 (2018-11-03), XP051478846**

## Description

## TECHNICAL FIELD

This application relates to the communication field, and more specifically, to a feedback information determining method and a communication apparatus.

## BACKGROUND

A fifth generation (the fifth generation, 5G) mobile communication system is dedicated to supporting higher system performance, and supporting a plurality of service types, different deployment scenarios, and a wider spectrum range. The plurality of service types include an enhanced mobile broadband (enhanced mobile broadband, eMBB) service, a massive machine-type communications (massive machine type communication, mMTC) service, an ultra-reliable low-latency communication (ultra-reliable and low-latency communications, URLLC) service, a multimedia broadcast multicast service (multimedia broadcast multicast service, MBMS), a positioning service, and the like.

Specific requirements of the URLLC service include: Data transmission reliability reaches 99.999%, a transmission latency is less than 1 ms, and signaling overheads are reduced as much as possible while requirements for high reliability and a low latency are met. Ensuring the reliability and the latency of the URLLC service becomes a problem of great concern in this field. Currently, 5G new radio (new radio, NR) downlink transmission supports a semi-persistent scheduling (semi-persistent scheduling, SPS) physical downlink shared channel (physical downlink shared channel, PDSCH) and a dynamically scheduled PDSCH. For downlink data transmission, hybrid automatic repeat request (hybrid automatic repeat request, HARQ) is an efficient transmission mechanism. On the one hand, reliability of the downlink data transmission can be greatly improved through retransmission. On the other hand, a terminal device feeds back HARQ acknowledgement (acknowledgement, ACK)/negative acknowledgement (negative acknowledgement, NACK) information, and a network device needs to perform retransmission only when the NACK is fed back, thereby improving data transmission efficiency. Currently, a HARQ_ACK codebook for the SPS PDSCH involves a case in which a minimum periodicity of the SPS PDSCH is 10 ms. In NR, a periodicity of the SPS PDSCH may be less than one slot, and a current design of the HARQ_ACK codebook for the SPS PDSCH cannot meet an ACK/NACK feedback of an SPS PDSCH whose periodicity is less than one slot. As a result, SPS PDSCH transmission efficiency is low, and SPS PDSCH transmission reliability is reduced.

US 2016/0278075 A1 describes a device therefor, and relates to a method comprising the steps of: selecting one uplink control channel resource corresponding to a plurality of HARQ-ACKs, from a plurality of uplink control channel resources; and transmitting a bit value corresponding to the plurality of HARQ-ACKs, by using the selected uplink control channel resource.

US 2015/0195072 A1 describes acknowledgement/not-acknowledgement (ACK/NACK) in a wireless communication system. The method comprises: receiving at least two downlink subframes among a plurality of downlink subframes; and transmitting, from an uplink subframe, the ACK/NACKs of the at least two downlink subframes, wherein at least two semi-persistent scheduling (SPS) data channels can be assigned to the plurality of the downlink subframes.

OPPO, "Remaining details on HARQ-ACK transmission", vol. RAN WG1, no. Busan, Korea; 20180521 - 20180525, (20180520), 3GPP DRAFT; R1-1806838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings%5F3GPP%5FSYNC/RAN1/Docs/, discusses to determine the semi-static HARQ-ACK codebook in a slot, the UE does not report ACK/NACK for the PDSCH, received in the downlink association set, whose HARQ-ACK is indicated to transmit on a different slot.

LG ELECTRONICS, "Remaining issues on CA and HARQ-ACK codebook", vol. RAN WG1, no. Busan, Korea; 20180521 - 20180525, (20180512), 3GPP DRAFT; R1-1806630 NR CA-AN REMAINING_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg%5Fran/WG1%5FRL1/TSGR1%5F93/Docs, discusses to generate a Dynamic HARQ-ACK (sub-)codebook according to TB/CBG configuration per cell (e.g. one for TB-configured cells, the other for CBG-configured cells).

SHARP, "Remaining issues on HARQ-ACK of SPS PDSCH release", vol. RAN WG1, no. Spokane, US; 20181112 - 20181116, (20181111), 3GPP DRAFT; R1-1813202, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings%SF3GPP%SFSYNC/RAN1/Docs/R1%2D1813202%2Ezip, discusses that a location in the Type-1 HARQ-ACK codebook for HARQ-ACK information corresponding to a SPS PDSCH release is determined by Time domain resource assignment field included in the SPS PDSCH release, and the UE does not expect to receive any unicast PDSCH in an occasion including the location associated with HARQ-ACK of SPS PDSCH release asfollowing textproposal #1 for subclause 9.1.2.1 in TS 38.213.

## SUMMARY

This application provides a feedback information determining method and a communication apparatus, to determine, based on a periodicity of a PDSCH when the periodicity of the PDSCH is relatively small, a HARQ_ACK codebook corresponding to the PDSCH in a time unit, to ensure that all possible positions of the PDSCH in the time unit correspond to resources or positions for feeding back an ACK/NACK of the PDSCH, so that PDSCH transmission efficiency and transmission reliability are improved.

The invention is set out in independent claims 1, 3, 5 and 6.

## BRIEF DESCRIPTION OF DRAWINGS

FIG. 1 is a schematic architectural diagram of a mobile communication system to which an embodiment of this application is applicable;

FIG. 2 is a schematic diagram of generating a semi-static codebook of an SPS PDSCH based on a K1 set;

FIG. 3 is a schematic diagram of grouping 16 different time domain resources in one slot;

FIG. 4 is a schematic diagram of determining an ACK/NACK codebook in a slot when a periodicity of an SPS PDSCH is seven symbols;

FIG. 5 is a schematic interaction diagram of a feedback information determining method according to an embodiment of this application;

FIG. 6 is a schematic interaction diagram of another example of a feedback information determining method according to an embodiment of this application;

FIG. 7 is a schematic diagram of M second time domain resources determined based on a position of the first PDSCH and a periodicity of a PDSCH;

FIG. 8 is a schematic diagram of another example of M second time domain resources determined based on a position of the first PDSCH and a periodicity of a PDSCH;

FIG. 9 is a schematic diagram of determining M second time domain resources in a first time unit based on S third time domain resources and a periodicity of a PDSCH;

FIG. 10 is a schematic interaction diagram of another example of a feedback information determining method according to an embodiment of this application;

FIG. 11 is a schematic diagram of determining M second time domain resources in a first time unit based on S third time domain resources and a periodicity of a PDSCH;

FIG. 12 is a schematic interaction diagram of another example of a feedback information determining method according to an embodiment of this application;

FIG. 13 is a schematic diagram of a communication apparatus according to an embodiment of this application;

FIG. 14 is a schematic diagram of another example of a communication apparatus according to an embodiment of this application;

FIG. 15 is a schematic diagram of a communication apparatus according to an embodiment of this application;

FIG. 16 is a schematic diagram of another example of a communication apparatus according to an embodiment of this application;

FIG. 17 is a schematic diagram of a terminal device according to an embodiment of this application; and

FIG. 18 is a schematic diagram of a network device according to an embodiment of this application.

## DESCRIPTION OF EMBODIMENTS

The following describes technical solutions in this application with reference to the accompanying drawings.

The technical solutions in embodiments of this application may be applied to various communication systems, for example, a long term evolution (long term evolution, LTE) system, a 5th generation (5th generation, 5G) mobile communication system, or a future evolved mobile communication system. A mobile communication system used in the embodiments is not limited in this application.

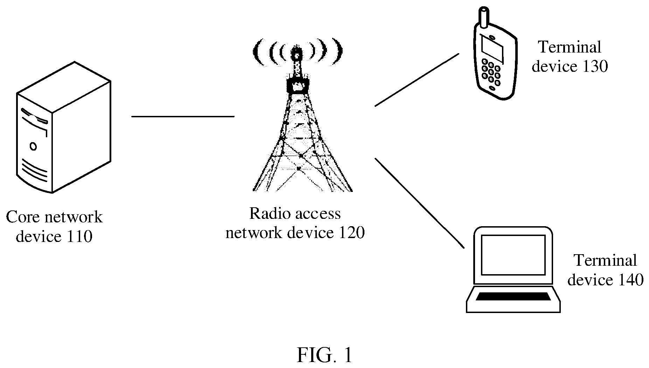

FIG. 1 is a schematic architectural diagram of a mobile communication system to which an embodiment of this application is applicable. As shown in FIG. 1, the mobile communication system 100 may include a core network device 110, a radio access network device 120, and at least one terminal device (for example, a terminal device 130 and a terminal device 140 shown in FIG. 1). The terminal device is connected to the radio access network device in a wireless manner, and the radio access network device is connected to the core network device in a wireless or wired manner. The core network device and the radio access network device may be different physical devices independent of each other, or functions of the core network device and a logical function of the radio access network device may be integrated into a same physical device, or a part of functions of the core network device and a part of functions of the radio access network device may be integrated into one physical device. The terminal device may be at a fixed location or may be movable. FIG. 1 is merely a schematic diagram. The communication system may further include another network device, for example, a wireless relay device and a wireless backhaul device, which are not shown in FIG. 1. Quantities of core network devices, radio access network devices, and terminal devices included in the mobile communication system are not limited in this embodiment of this application.

The terminal device in the mobile communication system 100 may also be referred to as a terminal Terminal, user equipment (user equipment, UE), a mobile station (mobile station, MS), a mobile terminal (mobile terminal, MT), or the like. The terminal device may be a mobile phone (mobile phone), a tablet computer (Pad), a computer having a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In this application, the foregoing terminal device and a chip that can be used in the foregoing terminal device are collectively referred to as a terminal device. It should be understood that a specific technology and a specific device form that are used by the terminal device are not limited in the embodiments of this application.

In the mobile communication system 100, the radio access network device 120 is an access device through which the terminal device accesses the mobile communication system in a wireless manner. The radio access network device 120 may be a base station, an evolved NodeB (evolved node B, eNodeB), a home base station, an access point (access point, AP) in a Wi-Fi system, a wireless relay node, a wireless backhaul node, a transmission point (transmission point, TP), a transmission reception point (transmission and reception point, TRP), or the like; or may be a gNB in an NR system; or may be a component or a part of devices that is/are included in a base station, for example, may be a centralized unit (centralized unit, CU), a distributed unit (distributed unit, DU), or a baseband unit (baseband unit, BBU). It should be understood that a specific technology and a specific device form that are used by the radio access network device are not limited in the embodiments of this application. In this application, the radio access network device is referred to as a network device for short. Unless otherwise specified, in this application, all network devices are radio access network devices. In this application, the network device may be a network device itself, or may be a chip used in the network device to complete a wireless communication processing function.

In the embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems, for example, a Linux operating system, a UNIX operating system, an Android operating system, an iOS operating system, or a Windows operating system, that implement service processing by using a process (process). The application layer includes applications such as a browser, an address book, word processing software, and instant communication software. In addition, a specific structure of an execution body of a method provided in the embodiments of this application is not particularly limited in the embodiments of this application, provided that a program that records code of the method provided in the embodiments of this application can be run to perform communication according to the method provided in the embodiments of this application. For example, the method provided in the embodiments of this application may be performed by a terminal device or a network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel and various other media that can store, include, and/or carry instructions and/or data.

For ease of understanding of the embodiments of this application, the following first briefly describes several concepts in this application.

Time unit and time domain symbol:

A time domain resource used for wireless communication between a base station and a terminal device may be divided into a plurality of time units. In addition, in the embodiments of this application, the plurality of time units may be consecutive, or a preset interval may be set between some adjacent time units. This is not particularly limited in the embodiments of this application.

In the embodiments of this application, a length of one time unit is not limited. For example, one time unit may be one or more subframes, one or more slots, or one or more symbols. One subframe is 1 ms, and one slot includes 14 symbols in a case of a normal cyclic prefix, and includes 12 symbols in a case of an extended cyclic prefix.

In the embodiments of this application, a symbol is also referred to as a time domain symbol, and may be an orthogonal frequency division multiplexing (orthogonal frequency division multiplexing, OFDM) symbol, or may be a single-carrier frequency division multiple access (single carrier frequency division multiple access, SC-FDMA) symbol, where SC-FDMA is also referred to as orthogonal frequency division multiplexing with transform precoding (orthogonal frequency division multiplexing with transform precoding, OFDM with TP).

In the embodiments of this application, configuration information is indication information sent by using higher layer signaling. The higher layer signaling may be signaling sent by a higher-layer protocol layer. The higher-layer protocol layer is at least one protocol layer above a physical layer. The higher-layer protocol layer may specifically include at least one of the following protocol layers: a media access control (medium access control, MAC) layer, a radio link control (radio link control, RLC) layer, a packet data convergence protocol (packet data convergence protocol, PDCP) layer, a radio resource control (radio resource control, RRC) layer, and a non-access stratum (non access stratum, NAS). After accessing a network, a user receives the configuration information, so that subsequent communication can be normally performed, where the configuration information includes information for a PDCCH, a PDSCH, an SPS PDSCH, and the like.

A 5G system is dedicated to supporting higher system performance and supporting a plurality of service types, different deployment scenarios, and a wider spectrum range. The plurality of service types include an enhanced mobile broadband eMBB service, an mMTC service, and a URLLC service. Compared with a 4G communication system, the 5G system has a major feature of supporting the URLLC service. There are a plurality of URLLC service types such as, typically, industrial control, industrial production process automation, human-computer interaction, and telemedicine. To better quantize performance indicators of the URLLC service to provide a reference input and an evaluation criterion for designing the 5G system, the performance indicators of the URLLC service are currently defined as follows:

Latency: The latency is defined as a transmission time period required for a user application layer data packet from a service data unit (service data unit, SDU) at a wireless protocol stack layer 2/layer 3 at a transmit end to an SDU at a wireless protocol stack layer 2/layer 3 at a receive end. Both an uplink user plane latency requirement and a downlink user plane latency requirement of the URLLC service are 0.5 ms. The performance requirement of 0.5 ms herein is applicable to only a case in which neither the transmit end (for example, a base station) nor the receive end (for example, a terminal) is in a discontinuous reception (discontinuous reception, DRX) mode. In addition, the performance requirement of 0.5 ms herein is an average latency of the data packet, and is not bound to the following reliability requirement.

Reliability: The reliability is a success probability that X-bit data is correctly transmitted from the transmit end to the receive end within a specific time period (L seconds), where the time period (L seconds) is still defined as the transmission time period required for the user application layer data packet from the SDU at the wireless protocol stack layer 2/layer 3 at the transmit end to the SDU at the wireless protocol stack layer 2/layer 3 at the receive end. For the URLLC service, a typical requirement is that reliability of sending data of 32 bytes (bytes) within 1 ms reaches 99.999%. It should be noted that the foregoing performance indicator is merely a typical value, and a specific URLLC service may have a different requirement on the reliability. For example, in some extremely severe industrial control, a transmission success probability needs to reach 99.9999999% within an end-to-end latency of 0.25 ms.

System capacity: The system capacity is a maximum cell throughput that a system can reach when interrupted users satisfy a specific proportion. The interrupted user herein is a user whose reliability requirement cannot be satisfied within a specific latency range.

Currently, NR downlink transmission supports transmission of a dynamic PDSCH, an SPS PDSCH, and a configured-grant PDSCH.

The dynamic PDSCH may be understood as that one PDSCH is scheduled by using one PDCCH. PDSCHs may have different time-frequency positions, and specific time-frequency positions are indicated by PDCCHs corresponding to the PDSCHs. ACK/NACK feedback occasions corresponding to the PDSCHs may also be different, and specific feedback occasions are also indicated by the PDCCHs corresponding to the PDSCHs. This PDSCH may also be referred to as the dynamic PDSCH or a PDSCH with scheduling information.

The SPS PDSCH may be understood as a mode applied to one configuration periodicity. For example, a network device may activate transmission of a plurality of SPS PDSCHs by sending one activation PDCCH. The activation PDCCH may be used to indicate a time domain position of the first SPS PDSCH, a slot in which the first SPS PDSCH is located, time-frequency positions of ACK or NACK feedback information corresponding to the SPS PDSCHs, and the like. In addition, the network device further sends configuration information by using higher layer signaling, to configure a periodicity of the SPS PDSCHs. With reference to the information, a terminal device may determine positions for receiving the SPS PDSCHs and the positions of the ACK or NACK feedback information corresponding to the SPS PDSCHs.

The configured-grant PDSCH may be understood as follows: Before a network device and a terminal device perform data transmission, the network device notifies, by using configuration information, the terminal device of information such as a time-frequency resource position of a PDSCH used for subsequent data transmission, and initial PDSCH transmission does not need to be scheduled by using physical layer control information, where the physical layer control information is, for example, DCI. The time-frequency resource position of the PDSCH may include a periodicity and a time-frequency position of the PDSCH, a time-frequency position of ACK or NACK feedback information corresponding to data sent on the PDSCH, and the like. The network device does not need to send an activation PDCCH to activate transmission of the configured-grant PDSCH.

The following provides descriptions in detail by using a transmission process of the SPS PDSCH as an example. First, the network device sends configuration information to the terminal device, where the configuration information includes a periodicity of the SPS PDSCH. Currently, a minimum periodicity of the SPS PDSCH is 10 ms.

The network device may further send an activation PDCCH to the terminal device, where the activation PDCCH is used to activate periodic transmission of the SPS PDSCH, a slot (slot) in which the first SPS PDSCH is located, and a time domain resource position of the first SPS PDSCH in the slot.

Specifically, a manner of indicating the slot in which the first SPS PDSCH is located is as follows: The activation PDCCH carries a slot offset K0, where K0 is used to indicate a quantity of slots in an interval between a slot in which the terminal device receives the activation PDCCH and the slot in which the first SPS PDSCH is located. For example, assuming that the terminal device receives the activation PDCCH in an $N^{th}$ slot, and a value of K0 is 1, the slot in which the first SPS PDSCH is located is an $(N+1)^{th}$ slot.

A manner of indicating a time domain resource of the first SPS PDSCH is as follows: The activation PDCCH indicates one row in a preconfigured or predefined time domain resource table. The time domain resource table includes a plurality of rows, and each row may include one value of each of K0, S, and L. S indicates a number of a start (start) symbol of a time domain resource in a slot. In a slot, all symbols may be numbered from 0 to 13. L represents a quantity of consecutive symbols of the time domain resource in the slot. L (length) represents a quantity of symbols occupied by a data channel, and may also be referred to as a quantity of consecutive symbols of the data channel, or may also be referred to as a time domain length of the data channel. L is a quantity of consecutive symbols starting from S. K0 represents the quantity of slots in the interval between the activation PDCCH and the slot in which the first SPS PDSCH is located. S and L may be jointly coded as a start and length indicator value (start and length indicator value, SLIV) parameter, and the SLIV may be used to indicate a start symbol occupied by the SPS PDSCH and a quantity of symbols occupied by the SPS PDSCH. That is, the time domain resource table may separately include the parameter S and the parameter L, or may include the SLIV parameter.

The time domain resource table is described with reference to an example in Table 1.

**Table 1**

| Index (index) | K0 | (S, L) |
|---|---|---|
| 0 | 1 | (2, 4) |
| 1 | 1 | (2, 2) |
| 2 | 2 | (3, 4) |
| 3 | 2 | (0, 7) |

In the time domain table shown in Table 1, assuming that the terminal device receives the activation PDCCH in the first slot, and the activation PDCCH may carry an indication index 0, after receiving the activation PDCCH, the terminal device may determine, based on the index 0, that the slot in which the first SPS PDSCH is located is a slot 2, and that the first SPS PDSCH is transmitted on a total of four symbols, namely, a symbol numbered 2 to a symbol numbered 5 in the slot 2. Because the periodicity of the SPS PDSCH is further configured, assuming that the periodicity is one slot, the terminal device receives the SPS PDSCH on the second to the fifth symbols in each slot starting from the second slot.

It should be understood that Table 1 is merely an example, and should not constitute any limitation on the time domain resource table.

After determining a transmission position of the SPS PDSCH, the terminal device needs to determine a time domain resource position of an ACK/NACK feedback of the SPS PDSCH. The following briefly describes a manner of determining a slot of the ACK/NACK feedback of the SPS PDSCH.

The activation PDCCH further indicates a slot offset K1 from the SPS PDSCH to the corresponding ACK/NACK feedback, where K1 may be carried in a PDSCH-to-HARQ-timing field. Assuming that the SPS PDSCH is transmitted in an $N^{th}$ downlink slot, the ACK/-NACK corresponding to the SPS PDSCH is transmitted in an $(N+K1)^{th}$ uplink slot. Assuming that a slot in which the activation PDCCH is located is an $M^{th}$ slot, a slot in which an ACK/NACK corresponding to the first SPS PDSCH is located is an $(M+K0+K1)^{th}$ slot.

A manner of determining a time domain resource of the dynamic PDSCH that is dynamically scheduled is the same as the manner of determining the time domain resource of the first SPS PDSCH in the SPS PDSCH. A manner of determining a slot of an ACK/NACK feedback of the PDSCH is also similar to the foregoing manner. Details are not described again.

Currently, when the terminal device feeds back an ACK/NACK on a physical uplink control channel (physical uplink control channel, PUCCH) in one time unit, because the network device may send a plurality of nonoverlapping PDSCHs (for example, including a dynamic PDSCH, an SPS PDSCH, and a configured-grant PDSCH) to the terminal device in one time unit, and this further increases complexity of feeding back ACKs/-NACKs on the PUCCH, the ACKs/NACKs fed back by the terminal device on the PUCCH in one time unit may correspond to a plurality of PDSCH occasions (occasions) in a plurality of time units. The ACKs/NACKs that need to be fed back in one time unit are concatenated to form a HARQ-ACK codebook, and then the HARQ-ACK codebook is sent. In a conventional technology, the time unit is one slot slot.

In an NR design, two HARQ-ACK codebook modes are supported, and configuration information is specifically sent to indicate which HARQ-ACK codebook mode is to be used to generate a HARQ-ACK codebook. The HARQ-ACK codebook may be understood as an arrangement of ACKs/NACKs that need to be fed back in an uplink time unit and that correspond to PDSCHs, and includes two meanings: first, specific PDSCHs whose ACKs/NACKs are included in the HARQ-ACK; and second, an arrangement sequence of the ACKs/NACKs of the PDSCHs in the codebook. In other words, ACK/-NACK feedback information that is of a plurality of PDSCHs and that needs to be sent in a same uplink time unit is arranged into a string of consecutive bits in a specific order, to form the HARQ-ACK codebook. The two HARQ-ACK codebook modes include a dynamic codebook (Dynamic codebook) mode and a semi-static codebook (Semi-static codebook) mode. HARQ-ACK codebook generation manners are different in different codebook modes, and this is described in detail below.

The dynamic codebook (Dynamic codebook) mode is also referred to as a type 2 HARQ codebook. The terminal device monitors a PDCCH on each PDCCH monitoring occasion (monitoring occasion), and performs the following operations by using a time domain resource allocation (time domain resource allocation) field and a PDSCH-to-HARQ-timing field in a detected PDCCH: First, the terminal device determines, based on a slot offset K0 from the PDCCH to a PDSCH and a number of a slot in which the PDCCH is located that are included in the time domain resource allocation field, a number of a slot in which the PDSCH is located. For example, if the number of the slot in which the PDCCH is located is n, the terminal device may determine, based on K0, that the number of the slot in which the PDSCH is located is n+K0. Then, the terminal device obtains a HARQ-ACK timing, namely, a slot offset K1 from the PDSCH to a corresponding ACK/NACK feedback, based on the PDSCH-to-HARQ-timing field, to learn of a number of a slot in which the corresponding ACK/NACK feedback is located. For example, if the number of the slot in which the PDSCH is located is n+K0, it is determined that the number of the slot in which the ACK/NACK feedback corresponding to the PDSCH is located is n+K0+K1. All ACKs/NACKs that need to be sent in a same slot are concatenated in a sequence, from front to rear in time domain, of PDCCHs of PDSCHs corresponding to the ACKs/NACKs, to generate a HARQ-ACK codebook. For example, in the slot numbered n+K0+K1, ACK/NACK feedback information corresponding to four pieces of data, namely, a PDSCH 1 to a PDSCH 4, needs to be sent, PDCCHs corresponding to the PDSCH 1 to the PDSCH 4 are a PDCCH 1 to a PDCCH 4, and the PDCCH 1 to the PDCCH 4 are in a sequence from front to rear in time domain. In this case, the feedback information of the PDSCH 1 to the PDSCH 4 is sequentially concatenated to generate a HARQ-ACK codebook.

The semi-static codebook (Semi-static codebook) mode is also referred to as a type 1 HARQ codebook. A process of determining the semi-static codebook includes the following steps: (1) The terminal device determines that a slot in which ACK/NACK feedback information is to be sent is an $i^{th}$ slot, where the slot i is specifically determined based on a PDCCH corresponding to a PDSCH. Assuming that a PDCCH in a slot n is used to schedule a PDSCH to be sent in a slot n+K0, and indicates that ACK/NACK feedback information corresponding to the PDSCH is in a slot n+K0+K1, the slot n+K0+K1 is the slot i. (2) The terminal device obtains a possible value K1 set (K1 set) of K1 based on configuration information sent by using higher layer signaling, and determines, based on the information, all slots in which all PDSCHs whose feedback information needs to be sent in the $i^{th}$ slot are located. (3) Then, the terminal device determines a potential value set of a PDSCH time domain position based on a time domain resource allocation table included in the configuration information sent by using the higher layer signaling, and determines a PDSCH candidate occasion (candidate occasion) in each of the slots in which all the PDSCHs are located. (4) The terminal device concatenates, in sequences from front to rear in time domain that are of the PDSCH candidate occasions and all the slots, ACKs/NACKs corresponding to the PDSCH candidate occasions in all the slots in which all the PDSCHs are located, to generate a HARQ-ACK codebook. For details, refer to the following descriptions of a process of generating a semi-static codebook.

The following describes in detail a process of generating a HARQ-ACK codebook in the semi-static codebook mode.

It is assumed that a slot in which ACK/NACK feedback information is sent is an $i^{th}$ slot, where the slot i is specifically determined based on a PDCCH corresponding to a PDSCH. Assuming that a PDCCH in a slot n is used to schedule a PDSCH to be sent in a slot n+K0, and indicates that ACK/NACK feedback information corresponding to the PDSCH is in a slot n+K0+K1, the slot n+K0+K1 is the slot i.

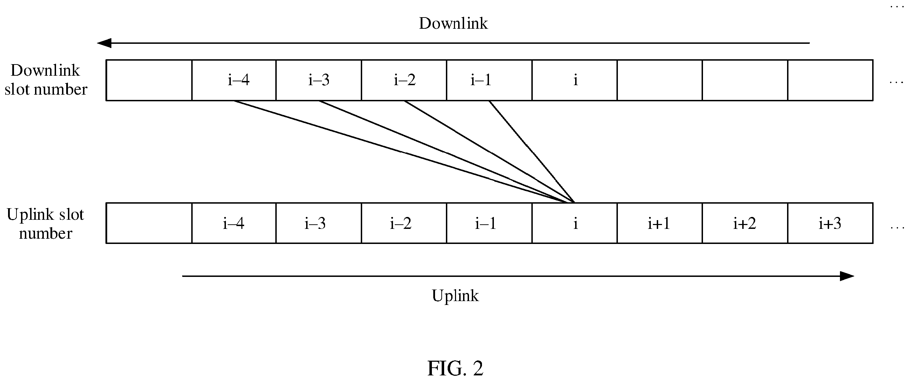

First, a possible value K1 set (K1 set) of K1 is obtained based on configuration information sent by using higher layer signaling. The terminal device determines, based on the information, all slots in which all PDSCHs whose feedback information needs to be sent in the $i^{th}$ slot are located. FIG. 2 is a schematic diagram of generating a semi-static codebook of a PDSCH based on a K1 set. Assuming that the configuration information sent by using the higher layer signaling indicates that the K1 set is {0, 1, 2, 3, 4}. when the HARQ-ACK codebook is generated based on the K1 set, counting is performed backwards from an $i^{th}$ slot based on the K1 set. That is, ACKs/NACKs corresponding to all PDSCHs received in five slots, namely, the $i^{th}$ slot, an $(i-1)^{th}$ slot, an $(i-2)^{th}$ slot, an $(i-3)^{th}$ slot, and an $(i-4)^{th}$ slot, are fed back in the $i^{th}$ slot. It should be understood that ACKs/NACKs corresponding to a dynamic PDSCH and an SPS PDSCH that are received in the $i^{th}$ slot, the $(i-1)^{th}$ slot, the $(i-2)^{th}$ slot, the $(i-3)^{th}$ slot, and the $(i-4)^{th}$ slot are also fed back in the $i^{th}$ slot. Similarly, if it is determined that a slot in which ACK/NACK feedback information is sent is an $(i+1)^{th}$ slot, ACKs/NACKs of PDSCHs received in five slots, namely, an $(i+1)^{th}$ slot, the $i^{th}$ slot, the $(i-1)^{th}$ slot, the $(i-2)^{th}$ slot, and the $(i-3)^{th}$ slot, are fed back based on the K1 set. The following describes how to determine ACK/NACK information that needs to be fed back in each slot.

For each slot in which an SPS PDSCH is sent, for example, any one of the $i^{th}$ slot, the $(i-1)^{th}$ slot, the $(i-2)^{th}$ slot, the $(i-3)^{th}$ slot, and the $(i-4)^{th}$ slot that are shown in FIG. 2, an ACK/NACK corresponding to the PDSCH transmitted in the slot is fed back in the $i^{th}$ slot. The following specifically describes a process of determining a corresponding PDSCH candidate occasion in each slot and determining an ACK/NACK corresponding to the PDSCH candidate occasion candidate occasion.

Then, after the $i^{th}$ slot, the $(i-1)^{th}$ slot, the $(i-2)^{th}$ slot, the $(i-3)^{th}$ slot, and the $(i-4)^{th}$ slot are determined, a potential value set of a PDSCH time domain position in each slot is determined based on a Time Domain Resource Allocation table included in the configuration information sent by using the higher layer signaling, that is, the PDSCH candidate occasion (candidate occasion) is determined in each of the $i^{th}$ slot, the $(i-1)^{th}$ slot, the $(i-2)^{th}$ slot, the $(i-3)^{th}$ slot, and the $(i-4)^{th}$ slot.

The $i^{th}$ downlink slot is used as an example for description. For the foregoing time domain resource table, it is assumed that the table includes 16 rows, and each row indicates values of S and L. The table is specific to one slot, that is, each downlink slot includes 16 possible time domain resource positions, namely, a potential value set, and a PDSCH may be transmitted on any one of the 16 different time domain resources. The 16 time domain resources overlap, and for overlapping time domain resources, a PDSCH may be transmitted on only one of the time domain resources at a time. Therefore, the overlapping time domain resources need to be grouped, to determine the PDSCH candidate occasion (candidate occasion) in the $i^{th}$ slot.

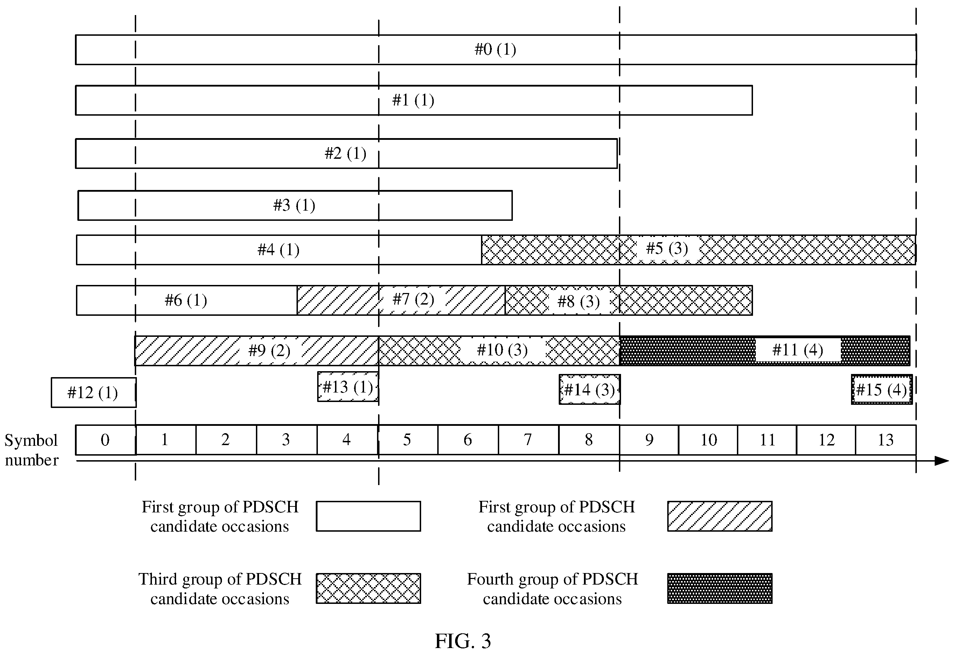

Specifically, FIG. 3 is a schematic diagram of grouping 16 different time domain resources in one slot, where the 16 different time domain resources are represented by #0 to #15. Grouping is performed based on an earliest end symbol, and the 16 different time domain resources may be grouped into four groups of PDSCH candidate occasions (candidate occasions). In other words, the 16 different time domain resources are grouped into the four groups of PDSCH candidate occasions. The four groups of PDSCH candidate occasions are represented by (1) to (4). Each group of PDSCH candidate occasions is associated with one or more time domain resources. As shown in FIG. 3, time domain resources associated with the first group of PDSCH candidate occasions include {#0, #1, #2, #3, #4, #6, #12}, time domain resources associated with the second group of PDSCH candidate occasions include {#7, #9, #13}, time domain resources associated with the third group of PDSCH candidate occasions include {#5, #8, #10, #14}, and time domain resources associated with the fourth group of PDSCH candidate occasions include {#11, #15}.

It is assumed that each of the four groups of PDSCH candidate occasions corresponds to feedback information of S bits, where a value of S is a positive integer, and specifically depends on a quantity of bits that need to be fed back for each PDSCH. Because time domain resources used to actually transmit a PDSCH cannot overlap, the PDSCH exists on only one time domain resource in each group of PDSCH candidate occasions. An ACK/NACK corresponding to the PDSCH candidate occasion is a feedback corresponding to a PDSCH received on a time domain resource associated with the PDSCH candidate occasion. If no PDSCH is received on the PDSCH candidate occasion, an ACK/-NACK corresponding to the PDSCH candidate occasion is a padding NACK.

For the $(i-1)^{th}$ downlink slot, the $(i-2)^{th}$ downlink slot, the $(i-3)^{th}$ downlink slot, and the $(i-4)^{th}$ downlink slot, an ACK/NACK corresponding to each PDSCH candidate occasion in the slots may be determined based on the foregoing process. Then, the ACKs/NACKs corresponding to the PDSCH candidate occasions in the slots are concatenated in sequences, from front to back in time domain, of the PDSCH candidate occasions and all the slots, to generate a HARQ-ACK codebook.

Finally, regardless of whether the dynamic codebook mode or the semi-static codebook mode is used, after determining the HARQ-ACK, the terminal device sends the HARQ-ACK codebook to the network device. Correspondingly, the network device receives the HARQ-ACK codebook. Specifically, a HARQ-ACK codebook that needs to be sent in one slot is determined based on each codebook mode, and the terminal device selects a PUCCH resource set (resource set) based on a quantity of bits, namely, a payload (payload size), of the HARQ-ACK codebook to feed back the HARQ-ACK codebook to the network device. Specifically, the configuration information sent by using the higher layer signaling includes a plurality of PUCCH resource sets (resource sets). After determining one PUCCH resource set from the plurality of PUCCH resource sets, the terminal device further determines, based on an ACK/NCK resource indicator (ACK/NCK Resource Indicator, ARI) byte on the last PDCCH in time domain corresponding to feedback information included in the HARQ-ACK codebook and by using an implicit indication method, which resource in the selected set is a PUCCH resource for feeding back the ACK/NCK codebook, where each PUCCH resource set includes at least eight PUCCH resources or at most 32 PUCCH resources. An ARI is usually three bits. When a quantity of PUCCH resources in the PUCCH resource set is greater than 8, the PUCCH resource set is divided into eight subsets (subsets). The ARI indicates a subset to be selected, and a start control channel element (control channel element, CCE) index (index) of the PDCCH is used to implicitly indicate which PUCCH in the subset is to be selected. Then, the HARQ-ACK codebook is sent to the network device on the determined PUCCH.

Alternatively, the terminal device may send the HARQ-ACK codebook on a PUCCH resource indicated in the configuration information sent by using the higher layer signaling.

Currently, a minimum periodicity of the SPS PDSCH is 10 ms. Therefore, in the $i^{th}$ downlink slot, only one time domain resource in the 16 possible time domain resources is finally used to transmit the SPS PDSCH.

In NR, an SPS PDSCH with a shorter periodicity and a configured-grant PDSCH may be used to support downlink URLLC transmission. This provides the following advantages: First, a data packet of a URLLC service is usually small. If a PDCCH is used for scheduling in each transmission, large control signaling overheads are caused, and resource utilization is reduced. Second, if the PDCCH is used for scheduling, high-reliability transmission of both the PDCCH and a PDSCH needs to be ensured, to ensure overall reliability of a downlink URLLC service. Consequently, an additional error risk is brought. Third, to ensure PDCCH reliability, a higher aggregation level needs to be used, and more resources are consumed. As a result, when a quantity of URLLC users increases, a base station sends PDCCHs to a plurality of users. This causes a PDCCH collision and reduces a quantity of URLLC users who can be supported by a system.

In the foregoing semi-static codebook manner, determining of the HARQ-ACK codebook that needs to be fed back in each slot is for the case in which the minimum periodicity of the SPS PDSCH is 10 ms. Because a time period of 10 ms is very long, and is an integer multiple of a slot length, time domain positions in which SPS PDSCHs may be transmitted and that are in slots are the same, and the SPS PDSCH transmitted in each slot appears only once in any time domain resource position of a plurality of preconfigured time domain resources. A PDSCH candidate occasion associated with the time domain resource position in which the SPS PDSCH is located and that is in each slot corresponds to a bit for feeding back an ACK/NACK. A feedback bit that corresponds to the PDSCH candidate occasion and that needs to be fed back in each slot is irrelevant to the periodicity of the SPS PDSCH. For example, in the example shown in FIG. 3, in each slot, the SPS PDSCH may be transmitted only on the 16 possible time domain resources, and there is correspondingly a bit for feeding back an ACK/NACK regardless of which time domain resource is used for transmission.

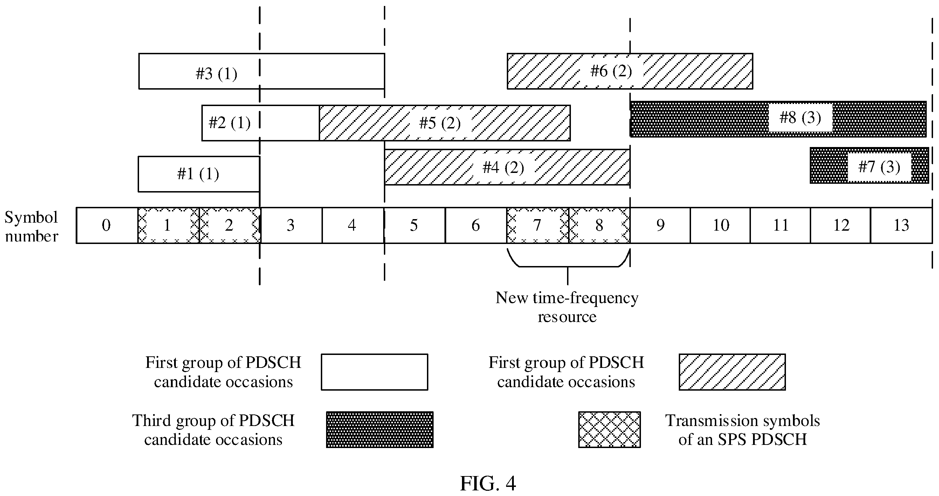

However, the periodicity of the SPS PDSCH in NR becomes shorter, for example, less than one slot. If an ACK/NACK codebook that needs to be fed back in each downlink slot is still determined in the foregoing manner, a problem occurs. An example in FIG. 4 is used for description. FIG. 4 is a schematic diagram of determining a feedback bit corresponding to a PDSCH candidate occasion corresponding to a slot when an SPS PDSCH includes seven symbols. In FIG. 4, it is assumed that a periodicity of the SPS PDSCH is seven symbols, and a time domain resource table preconfigured for each slot includes eight rows that respectively represent eight different time domain resources. The eight time domain resources are numbered from #1 to #8, and the SPS PDSCH may be transmitted on any time domain of the eight time domain resources. According to the grouping method shown in FIG. 3, the eight time domain resources may be grouped into three groups of PDSCH candidate occasions. The three groups of PDSCH candidate occasions are represented by (1) to (3). Each group of PDSCH candidate occasions is associated with one or more time domain resources. As shown in FIG. 4, time domain resources associated with the first group of PDSCH candidate occasions include {#1, #2, #3}, time domain resources associated with the second group of PDSCH candidate occasions include {#4, #5, #6}, and time domain resources associated with the third group of PDSCH candidate occasions include {#7, #8}. Assuming that each group of PDSCH candidate occasions corresponds to one-bit feedback information, feedback information corresponding to the three groups of PDSCH candidate occasions in the slot is three bits. The SPS PDSCH has a corresponding feedback bit regardless of which time domain resource in the eight time domain resources is used to transmit the SPS PDSCH. Assuming that an SPS PDSCH time domain position indicated by an activation PDCCH is the time domain resource #1, because the SPS PDSCH includes seven symbols, a next SPS PDSCH is transmitted on a symbol 7 and a symbol 8. However, the symbol 7 and the symbol 8 are not any one of the foregoing eight time domain resources, that is, a time domain resource, namely, the symbol 7 and the symbol 8, is not associated with any one of the four determined PDSCH candidate occasions. In other words, the time domain resource, namely, the symbol 7 and the symbol 8, has no corresponding feedback bit. As a result, an ACK/NACK of the SPS PDSCH received on the symbol 7 and the symbol 8 cannot be fed back, because no bit in the previously determined three-bit feedback information can correspond to the SPS PDSCH on the symbol 7 and the symbol 8. That is, the symbol 7 and the symbol 8 are a new time domain resource that is generated because the periodicity is less than one slot. In this case, if the terminal device does not feed back the ACK/NACK of the SPS PDSCH that is on the symbol 7 and the symbol 8, or if the terminal device autonomously selects a resource to send, to the network device, the ACK/NACK of the SPS PDSCH that is on the symbol 7 and the symbol 8, but the network device cannot identify the feedback information, SPS PDSCH transmission efficiency is low, and SPS PDSCH transmission reliability is reduced. A requirement of the SPS PDSCH for a low transmission latency cannot be met.

In view of this, this application provides a feedback information determining method, to determine, based on a periodicity of a PDSCH when the periodicity of the PDSCH is relatively small, for example, less than one slot, a HARQ_ACK codebook corresponding to the PDSCH in a time unit, to ensure that all possible positions of the PDSCH in the time unit correspond to bit positions for feeding back an ACK/NACK of the PDSCH, so that PDSCH transmission efficiency and transmission reliability are improved.

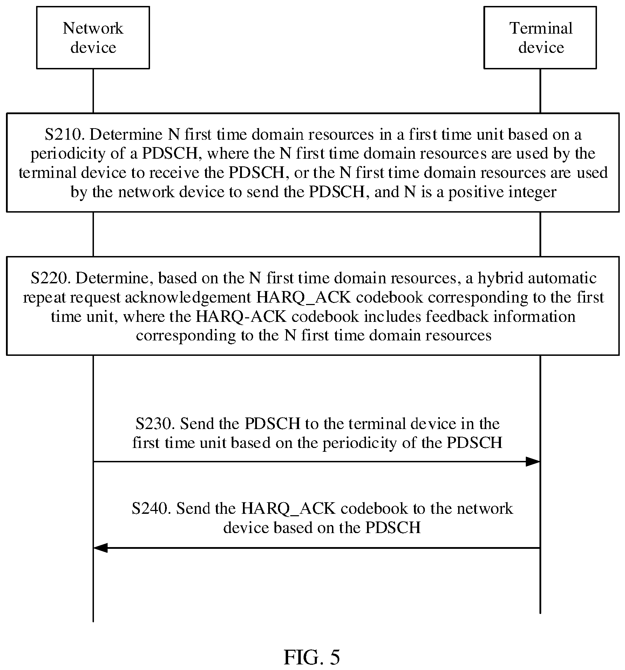

The following describes in detail, with reference to FIG. 5, the feedback information determining method provided in this application. FIG. 5 is a schematic interaction diagram of a feedback information determining method 200 according to an embodiment of this application. The method 200 may be applied to the scenario shown in FIG. 1, and certainly may also be applied to another communication scenario. This is not limited in this embodiment of this application.

It should be understood that in this embodiment of this application, the method 200 is described by using an example in which the method 200 is performed by a terminal device and a network device. By way of example rather than limitation, the method 200 may alternatively be performed by a chip used in a terminal device and a chip used in a network device.

As shown in FIG. 5, the method 200 includes the following steps.

S210. The terminal device and the network device determine N first time domain resources in a first time unit based on a periodicity of a PDSCH, where the N first time domain resources are used by the terminal device to receive the PDSCH, or the N first time domain resources are used by the network device to send the PDSCH, and N is a positive integer.

Specifically, in step S210, the terminal device and the network device may determine the N first time domain resources in the first time unit based on the periodicity of the PDSCH. The PDSCH may be an SPS PDSCH or a configured-grant PDSCH. The N first time domain resources may include only all possible time domain resources in the first time unit that are used to send the SPS PDSCH or the configured-grant PDSCH. Alternatively, the N first time domain resources include all possible time domain resources used to send the SPS PDSCH or the configured-grant PDSCH and all possible time domain resources used to send a dynamic PDSCH.

The first time unit may be one slot. Specifically, in a possible implementation, the first time may be any one of the slots that are determined in the foregoing semi-static codebook determining process and in which all the PDSCHs whose feedback information needs to be sent in the $i^{th}$ slot are located.

Specifically, it is assumed that a slot in which ACK/NACK feedback information is sent is the $i^{th}$ slot, where the slot i is specifically determined based on a PDCCH corresponding to a PDSCH. Assuming that a PDCCH in a slot n is used to schedule a PDSCH to be sent in a slot n+K0, and indicates that ACK/NACK feedback information corresponding to the PDSCH is in a slot n+K0+K1, the slot n+K0+K1 is the slot i. As shown in FIG. 2, a possible value K1 set (K1 set) of K1 is obtained based on configuration information sent by using higher layer signaling. The terminal device determines, based on the information, the slots in which all the PDSCHs whose feedback information needs to be sent in the $i^{th}$ slot are located, and the first time unit is any one of the slots in which all the PDSCHs are located. As shown in FIG. 2, assuming that the configuration information sent by using the higher layer signaling indicates that the K1 set is {0, 1, 2, 3, 4}, when a HARQ-ACK codebook is generated based on the K1 set, counting is performed backwards from an $i^{th}$ slot based on the K1 set. That is, ACKs/NACKs corresponding to all PDSCHs received in five slots, namely, the $i^{th}$ slot, an $(i-1)^{th}$ slot, an $(i-2)^{th}$ slot, an $(i-3)^{th}$ slot, and an $(i-4)^{th}$ slot are fed back in the $i^{th}$ slot. The first time unit may be any one of the five slots, namely, the $i^{th}$ slot, the $(i-1)^{th}$ slot, the $(i-2)^{th}$ slot, the $(i-3)^{th}$ slot, and the $(i-4)^{th}$ slot.

For the terminal device, the N first time domain resources included in the first time unit are used to receive the PDSCH. For example, the terminal device may receive the PDSCH on a part or all of the N first time domain resources. For the network device, the N first time domain resources included in the first time unit are used to send the PDSCH to the terminal device. The network device may send the PDSCH to the terminal device on a part or all of the N first time domain resources. The N first time domain resources are determined based on the periodicity of the PDSCH. The network device may send the PDSCH to the terminal device only within a range of the N first time domain resources, and does not send the PDSCH to the terminal device on a time domain resource other than the N first time domain resources. That is, the N first time domain resources are all possible time domain resource positions of the PDSCH in the first time unit.

The periodicity of the PDSCH may be indicated by configuration information. Specifically, the network device sends the configuration information.

The configuration information indicates the periodicity of the PDSCH, and the terminal device receives the configuration information, to determine the periodicity of the PDSCH. The periodicity of the PDSCH may be two symbols, seven symbols, or the like.

It should be noted that in this embodiment of this application, the periodicity of the PDSCH is any one of one or more PDSCH periodicities indicated in the configuration information. That is, if the configuration information received by the terminal device includes a plurality of PDSCH periodicities, N1 first time-frequency resources in the first time unit may be determined for each PDSCH periodicity by using the method in this application. Finally, a set of first time domain resources determined for the plurality of PDSCH periodicities is determined as the N first time domain resources.

S220. The terminal device and the network device determine, based on the N first time domain resources, a hybrid automatic repeat request acknowledgement HARQ_ACK codebook corresponding to the first time unit, where the HARQ-ACK codebook includes feedback information corresponding to the N first time domain resources.

In step S220, the terminal device and the network device may determine, based on the N first time domain resources, the HARQ_ACK codebook corresponding to the first time unit, where the HARQ-ACK codebook includes the feedback information corresponding to the N first time domain resources. Specifically, in a possible implementation, for a process of determining, based on the N first time domain resources, the HARQ_ACK codebook corresponding to the first time unit, refer to the method described in the foregoing process of generating the HARQ-ACK codebook in the semi-static codebook mode. The N first time domain resources are used as a potential value set of all PDSCH time domain positions, and then overlapping time domain resources are grouped by using a PDSCH candidate occasion grouping method, to determine a PD SCH candidate occasion candidate occasion in the first time unit.

Specifically, it is assumed that the determined N time domain resources are 16 time domain resources. As shown in FIG. 3, the 16 different time domain resources are represented by #0 to #15. Grouping is performed based on an earliest end symbol, and the 16 different time domain resources may be grouped into four groups of PDSCH candidate occasions (candidate occasions). In other words, the 16 different time domain resources are grouped into the four groups of PDSCH candidate occasions. The four groups of PDSCH candidate occasions are represented by (1) to (4). Each group of PDSCH candidate occasions is associated with one or more time domain resources. As shown in FIG. 3, time domain resources associated with the first group of PDSCH candidate occasions include {#0, #1, #2, #3, #4, #6, #12}, time domain resources associated with the second group of PDSCH candidate occasions include {#7, #9, #13}, time domain resources associated with the third group of PDSCH candidate occasions include {#5, #8, #10, #14}, and time domain resources associated with the fourth group of PDSCH candidate occasions include {#11, #15}.

Then, ACKs/NACKs corresponding to PDSCH candidate occasions in all first time units are concatenated in sequences, from front to back in time domain, of the PDSCH candidate occasions and all slots to generate a HARQ-ACK codebook. The HARQ-ACK codebook is the HARQ_ACK codebook corresponding to the first time unit. It is assumed that each of the four groups of PDSCH candidate occasions determined based on the N time domain resources corresponds to feedback information of S bits, where a value of S is a positive integer, and specifically depends on a quantity of bits that need to be fed back for each PDSCH. Because time domain resources used to actually transmit a PDSCH cannot overlap, the PDSCH exists on only one time domain resource in each group of PDSCH candidate occasions. An ACK/-NACK corresponding to the PDSCH candidate occasion is a feedback corresponding to a PDSCH received on the time domain resource associated with the PDSCH candidate occasion. If no PDSCH is received on the PDSCH candidate occasion, an ACK/NACK corresponding to the PDSCH candidate occasion is a padding NACK.

In other words, the HARQ-ACK codebook includes the feedback information corresponding to the N first time domain resources. Regardless of which time domain resource or time domain resources in the N first time domain resources is/are used by the terminal device to detect the PDSCH, one or more first time domain resources on which the PDSCH is detected have a bit of a corresponding ACK/NACK.

S230. The network device sends the PDSCH to the terminal device in the first time unit based on the periodicity of the PDSCH, and correspondingly, the terminal device receives the PDSCH.

In step S230, the network device sends the PDSCH to the terminal device in the first time unit based on the periodicity of the PDSCH. The network device may send the PDSCH to the terminal device on a part or all of the N first time domain resources. Correspondingly, the terminal device monitors the PDSCH on the N first time domain resources in the first time unit. For example, the terminal device may detect, on each of the N first time domain resources, whether the network device has sent data. If the terminal device detects that the network device has sent data, and correctly decodes the data, feedback information corresponding to the first time domain resource is an ACK. If the terminal device detects no data, or the terminal device detects the data but incorrectly decodes the data, feedback information corresponding to the first time domain resource is a NACK. Alternatively, the terminal device may monitor, based on information such as the periodicity and a position of the PDSCH, the PDSCH on only a first time domain resource on which the PDSCH may be transmitted and that is in the N first time domain resources. This is not limited in this application.

For a manner of determining the periodicity of the PDSCH and a manner of determining the first time unit, refer to the descriptions in step S210. Details are not described again.

S240. The terminal device sends the HARQ_ACK codebook to the network device based on the PDSCH. Correspondingly, the network device receives the HARQ_ACK codebook.

In step S240, the terminal device generates the HARQ_ACK codebook based on the detected PDSCH, and sends the HARQ_ACK codebook to the network device. For a specific process of generating the HARQ_ACK codebook, refer to the descriptions in step S220. Details are not described again.

For a process in which the terminal device sends the HARQ_ACK codebook to the network device, refer to the foregoing process in which the terminal device sends the HARQ-ACK codebook to the network device after the HARQ-ACK is determined in the dynamic codebook mode or the semi-static codebook mode, where the foregoing process includes the descriptions of the process of determining the PUCCH resource resource for sending the HARQ_ACK codebook. Details are not described herein again. Correspondingly, the network device receives the HARQ_ACK codebook.

In the feedback information determining method provided in this application, when the periodicity of the PDSCH is relatively small, for example, less than one slot, positions of a plurality of first time domain resources in a time unit are determined based on the periodicity of the PDSCH, PDSCH candidate occasions are regrouped for the plurality of first time domain resources, and a feedback bit is reserved for each PDSCH. In this way, the HARQ_ACK codebook corresponding to the first time unit is generated. It can be ensured that all possible positions of the PDSCH in the time unit correspond to bits or positions for feeding back an ACK/NACK of the PDSCH, and the ACK/NACK of the PDSCH may be fed back regardless of which time domain resource or time domain resources is/are used to transmit the PDSCH. This improves PDSCH transmission efficiency and transmission reliability.

It should be understood that the foregoing steps S230 and S240 are optional steps, and the method 200 may include only one of S230 and S240, or include neither S230 nor S240, or include both the two steps.

In this embodiment of this application, a length of the first time unit is one slot, or may be one mini-slot (mini-slot), where duration of the mini-slot is shorter than that of the slot. For example, the duration of the mini-slot may be two symbols, four symbols, or seven symbols. The length of the first time unit is not limited in this application.

In this embodiment of this application, the periodicity of the PDSCH is less than the length of the first time unit. For example, when the length of the first time unit is one slot, the periodicity of the PDSCH may be two symbols, seven symbols, or the like.

In this embodiment of this application, the PDSCH is the SPS PDSCH or the configured-grant PDSCH.

In the following descriptions, an example in which one slot has 14 symbols is used for description.

In this embodiment of this application, one slot may alternatively have 12 symbols.

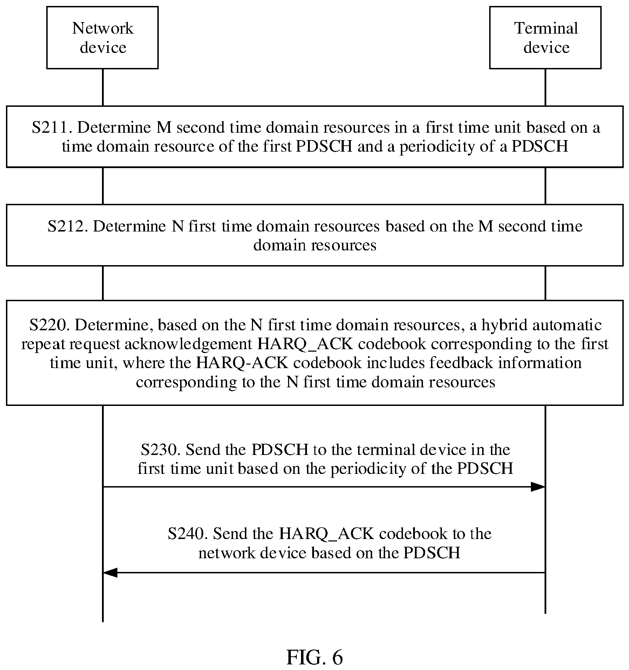

FIG. 6 is a schematic interaction diagram of a feedback information determining method according to some embodiments of this application. In some embodiments, based on the method steps shown in FIG. 5, step S210 in which the terminal device and the network device determine N first time domain resources in a first time unit based on a periodicity of a PDSCH in the method 200 includes S211 and S212.

S211. The network device and the terminal device determine M second time domain resources in the first time unit based on a time domain resource of the first PDSCH and the periodicity of the PDSCH.

In step S211, the M second time domain resources may be understood as all possible time-frequency resources that may be used by the network device to send the SPS PDSCH or the configured-grant PDSCH. M is a positive integer.

A position of the first PDSCH may be understood as a time domain resource used by the network device to actually send the first PDSCH. The PDSCH may be an SPS PDSCH or a configured-grant PDSCH.

Specifically, for example, for the SPS PDSCH, the terminal device may receive an activation PDCCH sent by the network device, where the activation PDCCH is used to indicate the time domain resource of the first SPS PDSCH. The first time unit may be the first slot that is indicated by the activation PDCCH and in which the SPS PDSCH is transmitted. In this case, the M second time domain resources in the first time unit include the time domain resource of the first SPS PDSCH. Alternatively, the first time unit may be a slot after the first slot that is indicated by the activation PDDCH and in which the SPS PDSCH is transmitted. If the first time unit is the slot after the first slot that is indicated by the activation PDDCH and in which the SPS PDSCH is transmitted, the M second time domain resources in the first time unit do not include the time domain resource of the first PDSCH.

It should be noted that in this embodiment of this application, the position of the first PDSCH is a position that is of the first PDSCH and that corresponds to the periodicity of the PDSCH. If the configuration information indicates one or more PDSCH periodicities, the PDSCH periodicities may correspond to different positions of the first PDSCH, and there is a correspondence between a time domain resource of the first PDSCH and a PDSCH periodicity. In this case, for each PDSCH periodicity and a corresponding time domain resource of the first PDSCH, N1 first time-frequency resources in the first time unit may be determined by using the method in this application. Finally, a set of first time domain resources determined for the plurality of PDSCH periodicities is determined as the N first time domain resources.

Optionally, the time domain resource of the first PDSCH is one of S third time domain resources. The S third time domain resources may be understood as preconfigured or predefined time-frequency resources used to transmit all the PDSCHs including the SPS PDSCH, the configured-grant PDSCH, and the dynamic PDSCH. In a specific implementation, the S third time domain resources may be determined by using a time domain resource table in the configuration information sent by a higher layer. A value of S depends on a quantity of rows of the time domain resource table. If the time domain resource table includes 16 rows, S=16; if the time domain resource table includes four rows, S is equal to 4. For a specific description method of the time domain resource table, refer to the descriptions of the time domain resource table in the foregoing SPS PDSCH transmission process. Details are not described again.

Optionally, the terminal device receives the activation PDCCH of the SPS PDSCH, where the PDCCH indicates one of the S third time domain resources as the time domain resource of the first PDSCH.

For the periodicity of the PDSCH, refer to the descriptions in step S210. Details are not described again.

Specifically, the determining M second time domain resources based on the time domain resource of the first PDSCH and the periodicity of the PDSCH includes: repeating the time domain resource of the first PDSCH based on the periodicity of the PDSCH, where a quantity of symbols in an interval between start symbols or end symbols of every two adjacent second time domain resources is the periodicity of the PDSCH. Therefore, the M second time domain resources in the first time unit may be determined.

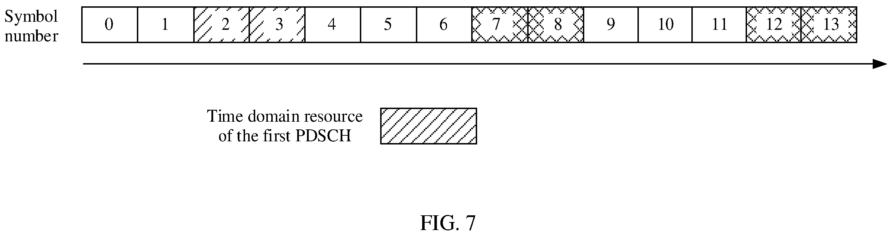

Descriptions are provided with reference to an example shown in FIG. 7. FIG. 7 is a schematic diagram of M second time domain resources determined based on a time domain position of the first PDSCH and a periodicity of a PDSCH. A slot shown in FIG. 7 is the first time unit, and includes a symbol 0 to a symbol 13. It is assumed that the first time unit may be the first slot that is indicated by the activation PDCCH and in which the SPS PDSCH is transmitted, in other words, the first time unit includes the time domain resource of the first PDSCH. The time domain resource of the first PDSCH is a symbol 2 and a symbol 3 in the first slot. If the periodicity of the PDSCH is five symbols, it may be determined that all possible time-frequency resources that are in the first slot and that may be used to send the SPS PDSCH or the configured-grant PDSCH are the symbol 2 and the symbol 3, a symbol 7 and a symbol 8, and a symbol 12 and a symbol 13. In other words, three second time domain resources are determined, and M=3. The three second time domain resources are the symbol 2 and the symbol 3, the symbol 7 and the symbol 8, and the symbol 12 and the symbol 13. The three second time domain resources include the time domain resource of the first PDSCH. An interval between start symbols of two adjacent second time domain resources, for example, an interval between the symbol 2 and the symbol 7 and an interval between the symbol 7 and the symbol 12, is five symbols. An interval between end symbols of two adjacent second time domain resources, for example, an interval between the symbol 3 and the symbol 8 and an interval between the symbol 8 and the symbol 13, is five symbols. Optionally, the M second time domain resources may be a time domain resource other than the time domain resource of the first PDSCH. That is, in FIG. 7, it may be determined that all the possible time-frequency resources that are in the first slot and that may be used to send the SPS PDSCH or the configured-grant PDSCH are the symbol 2 and the symbol 3, the symbol 7 and the symbol 8, and the symbol 12 and the symbol 13. Two second time domain resources are determined after the time domain resource of the first PDSCH, namely, the symbol 2 and the symbol 3, is removed, and M=2. The two second time domain resources are the symbol 7 and the symbol 8, and the symbol 12 and the symbol 13.

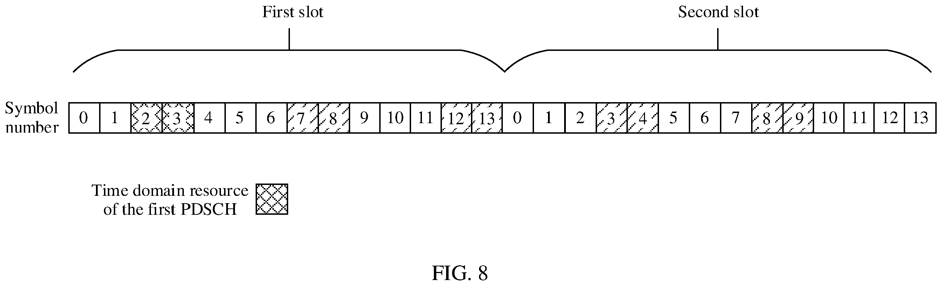

It should be understood that in the example shown in FIG. 7, the position of the first PDSCH is in the first time unit. Optionally, the position of the first PDSCH may not be in the first time unit. For example, in an example shown in FIG. 8, it is assumed that the first time unit is the second slot in FIG. 8, and the first time unit may be the slot after the slot that is indicated by the activation PDCCH and in which the SPS PDSCH is transmitted, in other words, the position of the first PDSCH is a symbol 2 and a symbol 3 of the first slot. In this case, all possible time-frequency resources that may be used to send the SPS PDSCH or the configured-grant PDSCH in the first time unit, namely, the second slot, are a symbol 3 and a symbol 4, and a symbol 8 and a symbol 9 in the second slot. A next time domain resource is a symbol 13 in the second slot and a symbol 0 in the third slot. Usually, the PDSCH does not cross a slot boundary. Therefore, the symbol 13 in the second slot and the symbol 0 in the third slot may not be counted into the M second time domain resources, in other words, two second time domain resources are determined, and M=2. The two second time domain resources are the symbol 3 and the symbol 4, and the symbol 8 and the symbol 9 in the second slot. An interval between start symbols of two adjacent second time domain resources, for example, an interval between the symbol 3 and the symbol 8, is five symbols. An interval between end symbols of two adjacent second time domain resources, for example, an interval between the symbol 4 and the symbol 9, is five symbols.

S212. The network device and the terminal device determine the N first time domain resources based on the M second time domain resources.

The N first time domain resources may include only all the possible time domain resources in the first time unit that are used to send the SPS PDSCH or the configured-grant PDSCH. Alternatively, the N first time domain resources include all the possible time domain resources used to send the SPS PDSCH or the configured-grant PDSCH and all the possible time domain resources used to send the dynamic PDSCH. Therefore, finally, the network device may actually send the SPS PDSCH or the configured-grant PDSCH on a part or all of the N first time domain resources. The M second time domain resources may be understood as all the possible time-frequency resources used by the network device to send the SPS PDSCH or the configured-grant PDSCH, where M is a positive integer, and M is less than or equal to N.

Therefore, in a specific implementation, in step S212, the determining the N first time domain resources based on the M second time domain resources may include: determining the M second time domain resources as the N first time domain resources, where M=N. That is, the N first time domain resources include only all the possible time domain resources in the first time unit that are used to send the SPS PDSCH or the configured-grant PDSCH.

For example, in the example shown in FIG. 7, if M is equal to 3, N=3, and three first time domain resources are determined, where the three first time domain resources are all the possible time domain resources in the first time unit that are used to send the SPS PDSCH or the configured-grant PDSCH. The three first time domain resources are the symbol 2 and the symbol 3, the symbol 7 and the symbol 8, and the symbol 12 and the symbol 13.

In the method provided in this application. when the periodicity of the PDSCH is relatively small, for example, less than one slot, all the M second time domain resources are determined by using the periodicity of the PDSCH and the time domain resource of the first PDSCH that are known, and the M second time domain resources are used as the N first time domain resources, namely, all the possible time domain resources used to send the SPS PDSCH or the configured-grant PDSCH, so that all possible time domain resource positions are considered in the process of determining the HARQ-ACK codebook, and it can be ensured that all the possible positions of the PDSCH in the time unit correspond to bits or positions for feeding back the ACK/NACK of the PDSCH, and the ACK/NACK of the PDSCH may be fed back regardless of which time domain resource or time domain resources is/are used to transmit the PDSCH. This improves the PDSCH transmission efficiency and transmission reliability. In addition, a quantity of bits of the HARQ_ACK codebook is reduced, complexity of the HARQ_ACK codebook is reduced, an uplink resource for transmitting the HARQ_ACK codebook is reduced, and reliability of the HARQ_ACK codebook is improved.

In a specific implementation, the N first time domain resources include the M second time domain resources and the S third time domain resources.

The first time unit includes the preconfigured or predefined S third time domain resources, and the S third time domain resources are used to receive the PDSCH. The S third time domain resources may be understood as preconfigured or predefined time-frequency resources used to transmit all the PDSCHs including the SPS PDSCH, the configured-grant PDSCH, and the dynamic PDSCH. In a specific implementation, the S third time domain resources may be determined by using a time domain resource table in the configuration information sent by a higher layer. A value of S depends on a quantity of rows of the time domain resource table. If the time domain resource table includes 16 rows, S=16; if the time domain resource table includes four rows, S is equal to 4. For a specific description method of the time domain resource table, refer to the descriptions of the time domain resource table in the foregoing SPS PDSCH transmission process. Details are not described again.

In this case, in step S212, when the N first time domain resources are determined based on the M second time domain resources, the determined N first time domain resources include all time domain resources, namely, the M second time domain resources and the S third time domain resources.

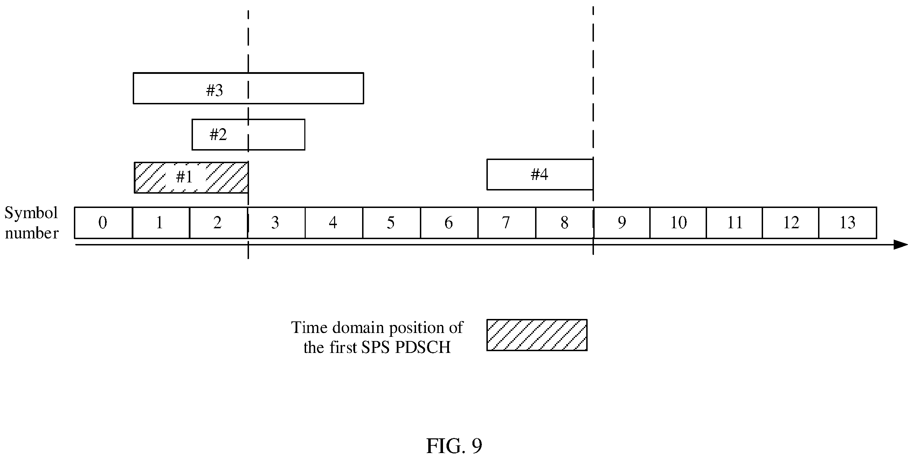

Specifically, an example shown in FIG. 9 is used for description. FIG. 9 is a schematic diagram of transmission in which the PDSCH is an SPS PDSCH, and the first time unit is the first slot that is indicated by the activation PDCCH and in which the SPS PDSCH is sent. The first slot in which the SPS PDSCH is sent includes the preconfigured or predefined S third time domain resources, and each of the S third time domain resources may be one row in a preconfigured or predefined time domain resource table. It is assumed that S is equal to 3, and the three third time domain resources are numbered #1 to #3 and are a symbol 1 and a symbol 2, the symbol 2 and a symbol 3, and the symbol 1 to a symbol 4. The position of the first PDSCH is any one of the three third time domain resources. It is assumed that the position of the first PDSCH is the time domain resource numbered #1 (the symbol 1 and the symbol 2). Assuming that the SPS PDSCH has seven symbols, a symbol 8 and a symbol 9 may be determined as a new time domain resource (a time domain resource numbered #4) by using the method for determining the M second time domain resources in step S211. In this case, according to the foregoing step, a value of M is 1 or 2, where when the value of M is 1, it indicates that the time domain resource numbered #4 is one second time domain resource; and when the value of M is 2, it indicates that the time domain resource numbered #4 and the time domain resource numbered #1 are two second time domain resources.

The value of S is 3, and the N first time domain resources include the M second time domain resources and the S third time domain resources. In other words, N is equal to 4, and it may be determined that the N first time domain resources are four time-frequency resources numbered #1 to #4. The four first time domain resources are the symbol 1 and the symbol 2, the symbol 2 and the symbol 3, the symbol 1 to the symbol 4, and the symbol 8 and the symbol 9.

In the method provided in this application. when the periodicity of the PDSCH is relatively small, for example, less than one slot, all the M second time domain resources are determined by using the periodicity of the PDSCH and the time domain resource of the first PDSCH that are known, and the N first time domain resources include not only the M second time domain resources but also the S third time domain resources configured by the higher layer, namely, all the possible time domain resources used to send the PDSCH, so that all possible time domain resource positions are considered in the process of determining the HARQ-ACK codebook, and it can be ensured that all the possible positions of the PDSCH in the time unit correspond to bits or positions for feeding back the ACK/NACK of the PDSCH, and the ACK/NACK of the PDSCH may be fed back regardless of which time domain resource or time domain resources is/are used to transmit the PDSCH. This improves the PDSCH transmission efficiency and transmission reliability, may reduce complexity of the HARQ_ACK codebook, and improves reliability of the HARQ_ACK codebook.

Specifically, for descriptions of steps S220 to S240 shown in FIG. 9, refer to the foregoing descriptions of steps S220 to S240. After the N first time domain resources are determined, the hybrid automatic repeat request acknowledgement HARQ_ACK codebook corresponding to the first time unit is determined based on the N first time domain resources, and then the HARQ_ACK codebook is sent to the network device. The HARQ-ACK codebook includes the feedback information corresponding to the N first time domain resources. For brevity, details are not described herein again.

Optionally, when the N first time domain resources include only the M second time domain resources, during determining of the HARQ-ACK codebook based on the N first time domain resources, the HARQ-ACK codebook is generated by merely considering whether the SPS PDSCH or the configured-grant PDSCH is received. Alternatively, when the N first time domain resources include the M second time domain resources and the S third time domain resources, all types of PDSCHs, namely, the SPS PDSCH, the configured-grant PDSCH, and the dynamic PDSCH, need to be considered, and feedback is performed depending on whether the PDSCHs are received and whether the PDSCHs are correctly received.

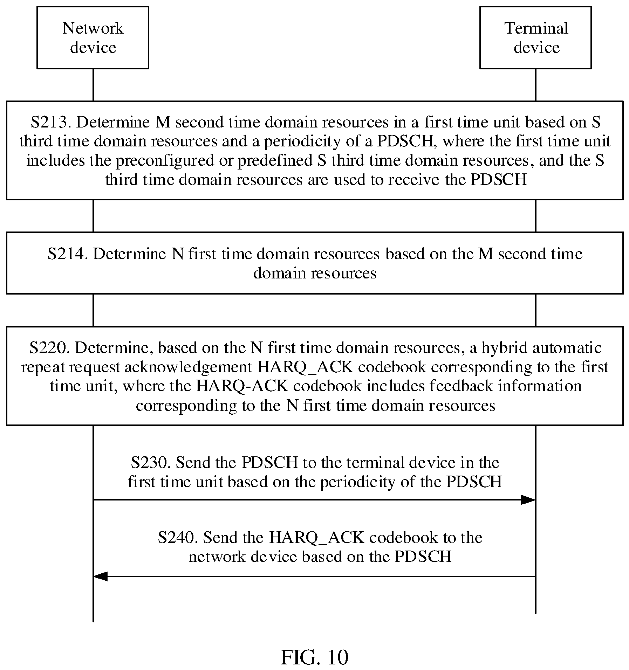

FIG. 10 is a schematic interaction diagram of a feedback information determining method according to some embodiments of this application. In some embodiments, the first time unit includes preconfigured or predefined S third time domain resources, and the S third time domain resources are used to receive the PDSCH. Based on the method steps shown in FIG. 5, step S210 in which the network device and the terminal device determine N first time domain resources in a first time unit based on a periodicity of a PDSCH in the method 200 further includes step S213 and step S214.

S213. The network device and the terminal device determine M second time domain resources in the first time unit based on the S third time domain resources and the periodicity of the PDSCH.

The M second time domain resources in the first time unit may be determined by repeating each of the S third time domain resources based on the periodicity of the PDSCH, where a quantity of symbols in an interval between start symbols or end symbols of every two adjacent second time domain resources is the periodicity of the PDSCH.

For that the first time unit includes the preconfigured or predefined S third time domain resources, each of the S third time domain resources may be one row in a preconfigured or predefined time domain resource table. For descriptions of the S third time domain resources, refer to related descriptions in S211 and S212.

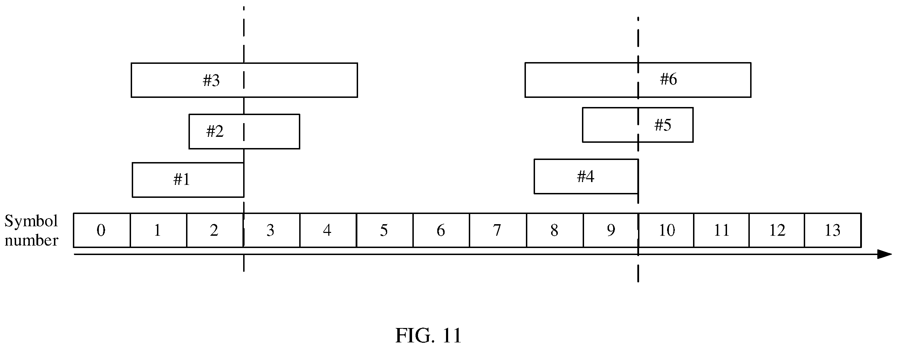

An example shown in FIG. 11 is used for description. FIG. 11 is a schematic diagram of transmission in which the PDSCH is an SPS PDSCH. A shown slot is the first time unit and includes a symbol 0 to a symbol 13. It is assumed that the first time unit may be the first slot that is indicated by an activation PDCCH and in which the SPS PDSCH is transmitted, in other words, the first time unit includes a time domain resource of the first PDSCH. The time domain resource of the first PDSCH is a symbol 2 and a symbol 3 in the first slot. It is assumed that S is equal to 3, and the three third time domain resources are a symbol 1 and the symbol 2 (a time-frequency resource numbered #1), the symbol 2 and the symbol 3 (a time-frequency resource numbered #2), and the symbol 1 to a symbol 4 (a time-frequency resource numbered #3). Assuming that the periodicity of the SPS PDSCH is seven symbols, three new time domain resources may be determined based on the S third time domain resources and the periodicity of the PDSCH, and are: a time-frequency resource numbered #4, where the time-frequency resource includes a symbol 8 and a symbol 9, and is determined based on the time domain resource numbered #1 in the S third time domain resources, and an interval between start symbols of the time domain resource numbered #1 and the time domain resource numbered #4 is seven symbols; a time-frequency resource numbered #5, where the time domain resource includes the symbol 9 and a symbol 10, and is determined based on the time domain resource numbered #2 in the S third time domain resources, and an interval between start symbols of the time domain resource numbered #2 and the time domain resource numbered #5 is seven symbols; and a time-frequency resource numbered #6, where the time domain resource includes the symbol 8 to a symbol 11, and is determined based on the time domain resource numbered #3 in the S third time domain resources, and an interval between start symbols of the time domain resource numbered #3 and the time domain resource numbered #6 is seven symbols. In this case, a value of M may be 3, and this indicates that three second time domain resources, namely, the time domain resources numbered #4 to #6, are newly determined. Alternatively, a value of M may be 6, that is, the time domain resources numbered #1 to #6 indicate all possible time domain resources used to transmit the SPS PDSCH.

Step S214. Determine the N first time domain resources based on the M second time domain resources.

For step S214, in a possible implementation, the M second time domain resources are determined as the N first time domain resources, and M=N. For details, refer to the descriptions in step S212 when M=N.

With reference to the example shown in FIG. 11, when the M second time domain resources are the time domain resources numbered #4 to #6, N is equal to 3. That is, there are three first time domain resources (the time-frequency resource #4, the time-frequency resource #5, and the time-frequency resource #6).

In the method in this embodiment, when the periodicity of the PDSCH is relatively small, for example, less than one slot, all the M second time domain resources are determined by using the S third time domain resources and the periodicity of the PDSCH that are known, and the M second time domain resources are used as the N first time domain resources, namely, all the possible time domain resources used to send the SPS PDSCH or the configured-grant PDSCH, so that all possible time domain resource positions are considered in the process of determining the HARQ-ACK codebook, and it can be ensured that all the possible positions of the PDSCH in the time unit correspond to bits or positions for feeding back the ACK/NACK of the PDSCH, and the ACK/NACK of the PDSCH may be fed back regardless of which time domain resource or time domain resources is/are used to transmit the PDSCH. This improves the PDSCH transmission efficiency and transmission reliability, reduces complexity of the HARQ_ACK codebook, reduces an uplink resource for transmitting the HARQ_ACK codebook, and improves reliability of the HARQ_ACK codebook.

For step S214, in another possible implementation, the determined N first time domain resources include the M second time domain resources and the S third time domain resources. For details, refer to the example shown in FIG. 11. When the M second time domain resources are the time domain resources numbered #4 to #6, the S third time domain resources are the time domain resources numbered #1 to #3. In this case, N is equal to 6, in other words, there are six first time domain resources: the time domain resources numbered #1 to #6.

In the method in this embodiment, when the periodicity of the PDSCH is relatively small, for example, less than one slot, all the M second time domain resources are determined by using the S third time domain resources and the periodicity of the PDSCH that are known, and the N first time domain resources include not only the M second time domain resources but also the S third time domain resources configured by the higher layer, namely, all the possible time domain resources used to send the PDSCH, so that all possible time domain resource positions are considered in the process of determining the HARQ-ACK codebook, and it can be ensured that all the possible positions of the PDSCH in the time unit correspond to bits or positions for feeding back the ACK/NACK of the PDSCH, and the ACK/NACK of the PDSCH may be fed back regardless of which time domain resource or time domain resources is/are used to transmit the PDSCH. This improves the PDSCH transmission efficiency and transmission reliability, and improves reliability of the HARQ_ACK codebook.

Further, in step S213, when the M second time domain resources in the first time unit are determined based on the S third time domain resources and the periodicity of the PDSCH, because the M second time domain resources usually cannot cross a slot boundary, it is not necessary to replicate all the S third time domain resources based on the periodicity of the PDSCH to obtain the M second time domain resources, and only a part of the S third time domain resources may be replicated based on the periodicity of the PDSCH to obtain the M second time domain resources. This can further save communication resources and improve communication efficiency.

Specifically, in a possible manner, when the periodicity of the PDSCH is two symbols, only a third time domain resource that is in the S third time domain resources and whose start symbol is even-numbered and duration is less than or equal to two symbols is replicated based on the periodicity of the PDSCH, to determine the M second time domain resources. For example, with reference to the example shown in FIG. 11, assuming that the periodicity of the PDSCH in the example shown in FIG. 10 is two symbols, and the S third time domain resources are the time domain resources #1 to #3, only the time domain resource #2 is replicated based on the periodicity, namely, two symbols, to obtain the M second time domain resources, where the value of M is 5 or 6. If M includes the time domain resource numbered #2, the value of M is 6, and the six time domain resources are sequentially: the symbol 2 and the symbol 3, the symbol 4 and a symbol 5, a symbol 6 and a symbol 7, the symbol 8 and the symbol 9, the symbol 10 and the symbol 11, and a symbol 12 and a symbol 13.

In another possible manner, when the periodicity of the PDSCH is half of a quantity of symbols included in the first time unit, the M second time domain resources are determined based on the periodicity of the PDSCH and a third time domain resource that is in the S third time domain resources and whose end symbol is earlier than or equal to an intermediate symbol in the first time unit. For example, it is assumed that the first time unit includes 14 symbols. In this case, the periodicity of the PDSCH is 7, and only a third time domain resource that is in the S third time domain resources and whose end symbol is earlier than or equal to the seventh symbol is replicated based on the periodicity of the PDSCH, to determine the M second time domain resources. For example, with reference to the example shown in FIG. 11, the S third time domain resources are the time domain resources numbered #1 to #3, and end symbols of the time domain resources numbered #1 to #3 are all earlier than the seventh symbol. In this case, the three third time domain resources are separately replicated based on the periodicity, namely, seven symbols, to obtain three second time domain resources, namely, the time domain resource numbered #4 that includes the symbol 8 and the symbol 9, the time-frequency resource numbered #5 that includes the symbol 9 and the symbol 10, and the time-frequency resource numbered #6 that includes the symbol 8 to the symbol 11. In this case, the value of M is 3.

In the method in this embodiment, when the periodicity of the PDSCH is relatively small, for example, less than one slot, it is ensured, according to a limitation rule and by determining all the M second time domain resources, that all the second time domain resources do not cross a boundary of a time unit, so that a quantity of the M second time domain resources is reduced, thereby reducing a quantity of the N first time domain resources, indirectly reducing the quantity of bits of the HARQ-ACK codebook, and reducing a resource for uplink feedback.

Specifically, for descriptions of steps S220 to S240 shown in FIG. 10, refer to the foregoing descriptions of steps S220 to S240. For brevity, details are not described herein again. After the N first time domain resources are determined, the hybrid automatic repeat request acknowledgement HARQ_ACK codebook corresponding to the first time unit is determined based on the N first time domain resources, and then the HARQ_ACK codebook is sent to the network device. The HARQ-ACK codebook includes the feedback information corresponding to the N first time domain resources. For brevity, details are not described herein again.

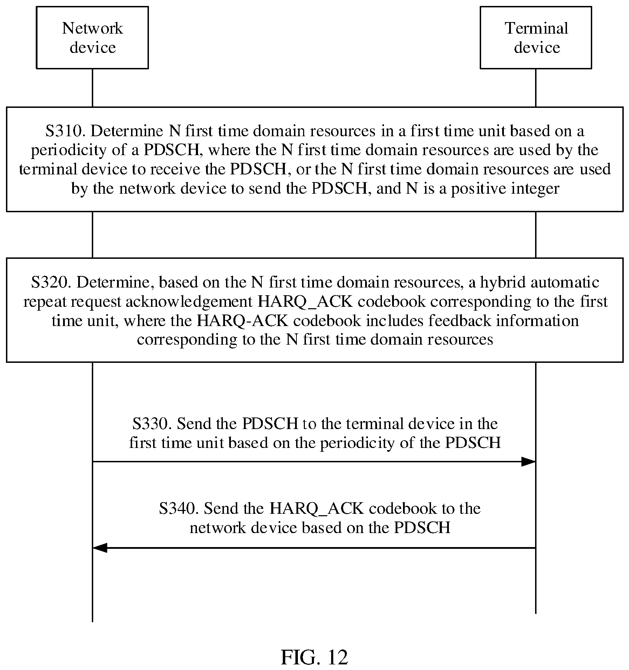

Optionally, when the N first time domain resources include only the M second time domain resources, during determining of the HARQ-ACK codebook based on the N first time domain resources, the HARQ-ACK codebook is generated by merely considering whether the SPS PDSCH or the configured-grant PDSCH is received and is correctly received, that is, the HARQ-ACK codebook includes only feedback information of the SPS PDSCH or the configured-grant PDSCH. Alternatively, when the N first time domain resources include the M second time domain resources and the S third time domain resources, all types of PDSCHs, namely, the SPS PDSCH, the configured-grant PDSCH, and the dynamic PDSCH, need to be considered, and feedback is performed depending on whether the PDSCHs are received and whether the PDSCHs are correctly received. This application further provides a feedback information determining method. FIG. 12 is a schematic interaction diagram of a feedback information determining method 300 according to an embodiment of this application. The method 300 may be applied to the scenario shown in FIG. 1, and certainly may also be applied to another communication scenario. This is not limited in this embodiment of this application.

As shown in FIG. 12, the method 300 includes S310 to S340.

S310. A terminal device and a network device determine N first time domain resources in a first time unit based on a periodicity of a PDSCH, where the N first time domain resources are used by the terminal device to receive the PDSCH, or the N first time domain resources are used by the network device to send the PDSCH, and N is a positive integer. For related descriptions of the PDSCH, descriptions of determining the first time unit, and a feature of the N first time domain resources, refer to the descriptions in step S210.

It should be noted that in this embodiment of this application, the periodicity of the PDSCH is a PDSCH periodicity with a smallest time domain length in one or more PDSCH periodicities indicated in configuration information. That is, if the configuration information received by the terminal device includes a plurality of PDSCH periodicities, the N first time domain resources in the first time unit may be determined by using the method in this embodiment for the PDSCH periodicity that has a smallest quantity of symbols or that is the shortest in time domain.

Optionally, the PDSCH is an SPS PDSCH or a configured-grant PDSCH.

A specific method for determining the N first time domain resources in the first time unit based on the periodicity of the PDSCH is:

dividing the first time unit based on the periodicity of the PDSCH, to determine the N first time domain resources in the first time unit.

Specifically, division may be performed according to the following formula (1) or formula (2), to determine the N first time domain resources in the first time unit:

$$N = \lceil L/R \rceil \quad (1)$$

$$N = \lceil L/R \rceil - 1 \quad (2)$$

In the formulas, L is a quantity of consecutive symbols in the first time unit, R is the periodicity of the PDSCH, and $\lceil \ \rceil$ represents rounding up. For example, if the periodicity of the PDSCH is two symbols, and L=14, seven first time domain resources may be determined, in other words, N=7. The seven first time domain resources are consecutive but do not overlap in time domain, that is, the seven first time domain resources are a symbol 0 and a symbol 1, a symbol 2 and a symbol 3, a symbol 4 and a symbol 5, a symbol 6 and a symbol 7, a symbol 8 and a symbol 9, a symbol 10 and a symbol 11, and a symbol 12 and a symbol 13 in a slot. For another example, if the periodicity of the PDSCH is four symbols, four first time domain resources may be determined, in other words, N=4. The four first time domain resources are consecutive but do not overlap in time domain. That is, the four first time domain resources are a symbol 0 to a symbol 3, a symbol 4 to a symbol 7, a symbol 8 to a symbol 11, and a symbol 12 and a symbol 13 in time domain.

S320. The terminal device and the network device determine, based on the N first time domain resources, a hybrid automatic repeat request acknowledgement HARQ_ACK codebook corresponding to the first time unit, where the HARQ-ACK codebook includes feedback information corresponding to the N first time domain resources.

Specifically, the terminal device and the network device determine, based on the N first time domain resources, the HARQ_ACK codebook corresponding to the first time unit, where the HARQ-ACK codebook includes the feedback information corresponding to the N first time domain resources. Specifically, the HARQ-ACK codebook includes N bit groups of feedback information that correspond to the first time unit, and each of the N first time domain resources in the first time unit corresponds to each bit group in the N bit groups of feedback information. That is, a $q^{th}$ first time domain resource in the N first time domain resources in the first time unit corresponds to a $q^{th}$ bit group in the N bit groups of feedback information. q is a positive integer less than or equal to N. A quantity of feedback bits in each bit group depends on a quantity of feedback bits of each SPS PDSCH, and is greater than or equal to 1.

If the terminal device receives a PDSCH, and a start symbol or an end symbol of a time domain resource corresponding to the PDSCH is located in a first time domain resource in the N first time domain resources, it is considered that a PDSCH is received on a time domain resource of the PDSCH, and feedback information corresponding to the PDSCH is filled in a feedback bit group corresponding to the first time domain resource. If no PDSCH is received on a first time domain resource in the N first time domain resources, a feedback bit group corresponding to the first time domain resource is a padding NACK.

For example, in the formulas, L is the quantity of consecutive symbols in the first time unit, R is the periodicity of the PDSCH, and ⌈ ⌉ represents rounding up. For example, if the periodicity of the PDSCH is two symbols, and L=14, seven first time domain resources may be determined, in other words, N=7. The seven first time domain resources are consecutive but do not overlap in time domain, that is, the seven first time domain resources are a symbol 0 and a symbol 1, a symbol 2 and a symbol 3, a symbol 4 and a symbol 5, a symbol 6 and a symbol 7, a symbol 8 and a symbol 9, a symbol 10 and a symbol 11, and a symbol 12 and a symbol 13 in a slot. Assuming that one bit is fed back for each PDSCH, the HARQ_ACK codebook corresponding to the first time unit includes seven bits, and the seven bits in the HARQ_ACK codebook are in a one-to-one correspondence with the seven first time domain resources. That is, the $1^{st}$ bit in the seven-bit HARQ_ACK codebook is used to send feedback information corresponding to the $1^{st}$ time domain resource in the seven first time domain resources, and the $2^{nd}$ bit in the seven-bit HARQ_ACK codebook is used to send feedback information corresponding to the $2^{nd}$ time domain resource in the seven first time domain resources. The rest can be deduced by analogy. Assuming that the terminal device receives a PDSCH in the first time unit, and a time domain resource of the PDSCH is a symbol 3 and a symbol 4, a start symbol of the time domain resource is the symbol 3, and belongs to the $2^{nd}$ first time domain resource in the seven first time domain resources. In this case, feedback information of the PDSCH is sent in the second bit of seven-bit feedback information. If no PDSCH is received on another first time domain resource in the first time domain resources, another feedback bit is filled with a NACK.

After determining feedback information of a plurality of first time units, the terminal device concatenates the N-bit feedback information of the time units to obtain a HARQ-ACK codebook, and the HARQ-ACK codebook is the finally determined HARQ_ACK codebook corresponding to the first time unit.

Subtraction of 1 in the formula (2) may be understood as that when the PDSCH is an SPS PDSCH, a time domain resource of the first SPS PDSCH needs to be removed. That is, the N first time domain resources do not include the time domain resource that is of the first SPS PDSCH and that is indicated by an activation PDCCH. In other words, feedback bits do not include a feedback bit that is of the first SPS PDSCH and that is indicated by the activation PDCCH. S330. The network device sends the PDSCH to the terminal device in the first time unit based on the periodicity of the PDSCH, and correspondingly, the terminal device receives the PDSCH.

Refer to S230, and details are not described again.

S340. The terminal device sends the HARQ_ACK codebook to the network device based on the PDSCH. Correspondingly, the network device receives the HARQ_ACK codebook.

Refer to S240, and details are not described again.

It should be understood that the foregoing steps S230 and S240 are optional steps, and only one step may be included, or none of the two steps is included, or both the two steps are included.

In the feedback information determining method provided in this application, when the periodicity of the PDSCH is relatively small, for example, less than one slot, positions of a plurality of first time domain resources in a time unit are determined based on the periodicity of the PDSCH, and a feedback bit is reserved for each of the plurality of first time domain resources. In this way, the HARQ_ACK codebook corresponding to the first time unit is generated. It can be ensured that all possible positions of the PDSCH in the time unit correspond to bits or positions for feeding back an ACK/NACK of the PDSCH, and the ACK/NACK of the PDSCH may be fed back regardless of which time domain resource or time domain resources is/are used to transmit the PDSCH.

This improves PDSCH transmission efficiency and transmission reliability, and reduces complexity of the HARQ_ACK codebook.

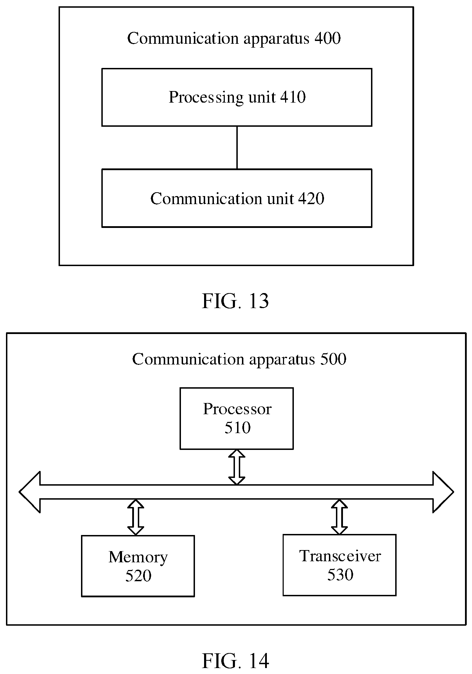

The feedback information determining method in the embodiments of this application is described in detail above with reference to FIG. 1 to FIG. 12. The following describes in detail communication apparatuses in the embodiments of this application with reference to FIG. 13 to FIG. 18.

FIG. 13 is a schematic block diagram of a communication apparatus 400 according to an embodiment of this application. The apparatus 400 may correspond to the terminal device described in the method 200 and the method 300, or may be a chip or a component used in the terminal device. In addition, modules or units in the apparatus 400 are respectively configured to perform actions or processing processes performed by the terminal device in the method 200 and the method 300. As shown in FIG. 13, the communication apparatus 400 may include a processing unit 410 and a communication unit 420.

The processing unit 410 is configured to determine N first time domain resources in a first time unit based on a periodicity of a physical downlink shared channel PDSCH, where the N first time domain resources are used to receive the PDSCH, and N is a positive integer.

The processing unit 410 is further configured to determine, based on the N first time domain resources, a hybrid automatic repeat request acknowledgement HARQ_ACK codebook corresponding to the first time unit, where the HARQ-ACK codebook includes feedback information corresponding to the N first time domain resources.

The communication unit 420 is configured to receive the PDSCH in the first time unit.

The processing unit 410 is further configured to generate, based on the PDSCH, the HARQ_ACK codebook corresponding to the first time unit.

The communication unit 420 is further configured to send the HARQ_ACK codebook.

According to the communication apparatus provided in this application, a HARQ_ACK codebook corresponding to the PDSCH in a time unit is determined based on the periodicity of the PDSCH, so that it can be ensured that all possible positions of the PDSCH in the time unit correspond to resources or positions for feeding back an ACK/NACK of the PDSCH. After the PDSCH is received, the ACK/NACK of the PDSCH may be fed back regardless of which time domain resource or time domain resources is/are used to transmit the PDSCH. This improves PDSCH transmission efficiency and transmission reliability.

Optionally, in some embodiments of this application, the processing unit 410 is specifically configured to determine M second time domain resources in the first time unit based on a time domain resource of the first PDSCH and the periodicity of the PDSCH, and determine the N first time domain resources based on the M second time domain resources.

Optionally, in some embodiments of this application, the first time unit includes preconfigured or predefined S third time domain resources, the S third time domain resources are used to receive the PDSCH, and the processing unit 410 is specifically configured to: determine M second time domain resources in the first time unit based on the S third time domain resources and the periodicity of the PDSCH, and determine the N first time domain resources based on the M second time domain resources.

Optionally, in some embodiments of this application, M=N, and the M second time domain resources are the N first time domain resources.

Optionally, in some embodiments of this application, the first time unit includes the preconfigured or predefined S third time domain resources, and the N first time domain resources include the M second time domain resources and the S third time domain resources.

Optionally, in some embodiments of this application, the first time unit includes preconfigured or predefined S third time domain resources, and the time domain resource of the first PDSCH is one of the S third time domain resources.

Optionally, in some embodiments of this application, the N first time domain resources in the first time unit are consecutive but do not overlap, and the HARQ_ACK codebook corresponding to the first time unit includes N bits, where $N = \lceil L/R \rceil$ or $N = \lceil L/R \rceil - 1$, L is a quantity of consecutive symbols in the first time unit, R is the periodicity of the PDSCH, the N bits correspond to the N first time domain resources, and the 1st bit in the N bits is used to send feedback information corresponding to the 1st time domain resource in the N first time domain resources.

Optionally, in some embodiments of this application, the processing unit 410 is specifically configured to: when the periodicity of the PDSCH is two symbols, determine the M second time domain resources based on the periodicity of the PDSCH and a third time domain resource that is in the S third time domain resources and whose start symbol is even-numbered and duration is less than or equal to two symbols; and/or

when the periodicity of the PDSCH is half of a quantity of symbols included in the first time unit, determine the M second time domain resources based on the periodicity of the PDSCH and a third time domain resource that is in the S third time domain resources and whose end symbol is earlier than or equal to an intermediate symbol in the first time unit.

Optionally, in some embodiments of this application, the communication unit 420 is further configured to receive a physical downlink control channel PDCCH, where the PDCCH indicates the time domain resource of the first PDSCH.

Optionally, in some embodiments of this application, the first time unit is one slot.

Optionally, in some embodiments of this application, the periodicity of the PDSCH is less than a length of the first time unit.

Optionally, in some embodiments of this application, the PDSCH is a semi-persistent scheduling SPS PDSCH or a configured-grant PDSCH.

It should be understood that, for specific processes in which the units in the apparatus 400 perform the foregoing corresponding steps, refer to the foregoing descriptions related to the terminal device with reference to the embodiments shown in FIG. 5, FIG. 6, and FIG. 9 and the related embodiments of the method 200 and the method 300. For brevity, details are not described herein again.

Optionally, the communication unit 420 may include a receiving unit (module) and a sending unit (module), which are configured to perform steps of receiving and sending information by the terminal device in the embodiments of the method 200 and the method 300 and the embodiments shown in FIG. 5, FIG. 6, FIG. 10, and FIG. 12. Optionally, the communication apparatus 400 may further include a storage unit 430, configured to store instructions executed by the processing unit 410 and the communication unit 420. The processing unit 410, the communication unit 420, and the storage unit 430 are in communication connection. The storage unit 430 stores the instructions. The processing unit 410 is configured to execute the instructions stored in the storage unit 430. The communication unit 420 is configured to send or receive a specific signal under driving of the processing unit 410.

It should be understood that the communication unit 420 may be a transceiver, an input/output interface, or an interface circuit. The storage unit 430 may be a memory. The processing unit 410 may be implemented by a processor. As shown in FIG. 14, a communication apparatus 500 may include a processor 510, a memory 520, and a transceiver 530.

The communication apparatus 400 shown in FIG. 13 or the communication apparatus 500 shown in FIG. 14 can implement the steps performed by the terminal device in the embodiments of the method 200 and the method 300 and the embodiments shown in FIG. 5, FIG. 6, FIG. 10, and FIG. 12. For similar descriptions, refer to the descriptions in the foregoing corresponding methods. To avoid repetition, details are not described herein again.

The communication apparatus 400 shown in FIG. 13 or the communication apparatus 500 shown in FIG. 14 may be a terminal device.

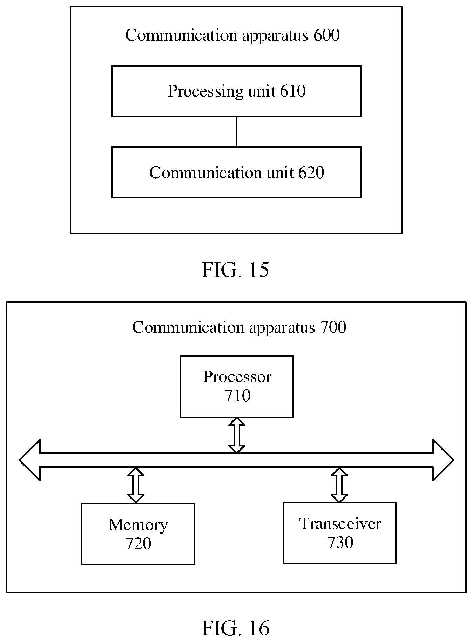

FIG. 15 is a schematic block diagram of a communication apparatus 600 according to an embodiment of this application. The apparatus 600 may correspond to the network device described in the method 200 and the method 300, or may be a chip or a component used in the network device. In addition, modules or units in the apparatus 600 are respectively configured to perform actions or processing processes performed by the network device in the method 200 and the method 300. As shown in FIG. 15, the communication apparatus 600 may include a processing unit 610 and a communication unit 620.

The processing unit 610 is configured to determine N first time domain resources in a first time unit based on a periodicity of a physical downlink shared channel PDSCH, where the N first time domain resources are used to receive the PDSCH, and N is a positive integer.

The processing unit 610 is further configured to determine, based on the N first time domain resources, a hybrid automatic repeat request acknowledgement HARQ_ACK codebook corresponding to the first time unit, where the HARQ-ACK codebook includes feedback information corresponding to the N first time domain resources.

The communication unit 620 is configured to send the PDSCH in the first time unit.

The communication unit 620 is further configured to receive the HARQ_ACK codebook corresponding to the first time unit.

According to the communication apparatus provided in this application, a HARQ_ACK codebook corresponding to the PDSCH in a time unit is determined based on the periodicity of the PDSCH, to ensure that all possible positions of the PDSCH in the time unit correspond to resources or positions for feeding back an ACK/NACK of the PDSCH, so that PDSCH transmission efficiency and transmission reliability are improved.

Optionally, in some embodiments of this application, the processing unit 610 is specifically configured to determine M second time domain resources in the first time unit based on a time domain resource of the first PDSCH and the periodicity of the PDSCH, and determine the N first time domain resources based on the M second time domain resources.

Optionally, in some embodiments of this application, the first time unit includes preconfigured or predefined S third time domain resources, the S third time domain resources are used to receive the PDSCH, and the processing unit 610 is specifically configured to:
determine M second time domain resources in the first time unit based on the S third time domain resources and the periodicity of the PDSCH, and determine the N first time domain resources based on the M second time domain resources.

Optionally, in some embodiments of this application, M=N, and the M second time domain resources are the N first time domain resources.

Optionally, in some embodiments of this application, the first time unit includes the preconfigured or predefined S third time domain resources, and the N first time domain resources include the M second time domain resources and the S third time domain resources.

Optionally, in some embodiments of this application, the first time unit includes preconfigured or predefined S third time domain resources, and the time domain resource of the first PDSCH is one of the S third time domain resources.

Optionally, in some embodiments of this application, the N first time domain resources in the first time unit are consecutive but do not overlap, and the HARQ_ACK codebook corresponding to the first time unit includes N bits, where $N = \lceil L/R \rceil$ or $N = \lceil L/R \rceil - 1$, L is a quantity of consecutive symbols in the first time unit, R is the periodicity of the PDSCH, the N bits correspond to the N first time domain resources, and the 1st bit in the N bits is used to send feedback information corresponding to the 1st time domain resource in the N first time domain resources.

Optionally, in some embodiments of this application, the processing unit 610 is specifically configured to: when the periodicity of the PDSCH is two symbols, determine the M second time domain resources based on the periodicity of the PDSCH and a third time domain resource that is in the S third time domain resources and whose start symbol is even-numbered and duration is less than or equal to two symbols; and/or when the periodicity of the PDSCH is half of a quantity of symbols included in the first time unit, determine the M second time domain resources based on the periodicity of the PDSCH and a third time domain resource that is in the S third time domain resources and whose end symbol is earlier than or equal to an intermediate symbol in the first time unit.

Optionally, in some embodiments of this application, the communication unit 620 is further configured to send a physical downlink control channel PDCCH, where the PDCCH indicates the time domain resource of the first PDSCH.

Optionally, in some embodiments of this application, the first time unit is one slot.

Optionally, in some embodiments of this application, the periodicity of the PDSCH is less than a length of the first time unit.

Optionally, in some embodiments of this application, the PDSCH is a semi-persistent scheduling SPS PDSCH or a configured-grant PDSCH.

It should be understood that, for specific processes in which the units in the apparatus 600 perform the foregoing corresponding steps, refer to the foregoing descriptions related to the network device with reference to the embodiments shown in FIG. 5, FIG. 6, FIG. 10, and FIG. 12 and the related embodiments of the method 200 and the method 300. For brevity, details are not described herein again.

Optionally, the communication unit 620 may include a receiving unit (module) and a sending unit (module), which are configured to perform steps of receiving and sending information by the network device in the embodiments of the method 200 and the method 300 and the embodiments shown in FIG. 5, FIG. 6, FIG. 10, and FIG. 12. Optionally, the communication apparatus 600 may further include a storage unit 630, configured to store instructions executed by the processing unit 610 and the communication unit 620. The processing unit 610, the communication unit 620, and the storage unit 630 are in communication connection. The storage unit 630 stores the instructions. The processing unit 610 is configured to execute the instructions stored in the storage unit 630. The communication unit 620 is configured to send or receive a specific signal under driving of the processing unit 610.

It should be understood that the communication unit 620 may be a transceiver, an input/output interface, or an interface circuit. The storage unit 630 may be a memory. The processing unit 610 may be implemented by a processor. As shown in FIG. 16, a communication apparatus 600 may include a processor 710, a memory 720, and a transceiver 730.

The communication apparatus 600 shown in FIG. 15 or the communication apparatus 700 shown in FIG. 16 can implement the steps performed by the network device in the embodiments of the method 200 and the method 300. For similar descriptions, refer to the descriptions in the foregoing corresponding methods. To avoid repetition, details are not described herein again.

The communication apparatus 600 shown in FIG. 15 or the communication apparatus 700 shown in FIG. 16 may be a network device.

It should be further understood that division into the units in the apparatus is merely division into logical functions. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. Alternatively, each unit may be stored in a memory in a form of a program to be invoked by a processing element of the apparatus to perform a function of the unit. The processing element herein may also be referred to as a processor, and may be an integrated circuit having a signal processing capability. In an implementation process, the steps in the foregoing methods or the foregoing units may be implemented by using a hardware integrated logic circuit in the processor element, or may be implemented in a form of software invoked by the processing element.

For example, a unit in any one of the foregoing apparatuses may be one or more integrated circuits configured to implement the foregoing methods, for example, one or more application-specific integrated circuits (application specific integrated circuit, ASIC), one or more digital signal processors (digital signal processor, DSP), one or more field programmable gate arrays (field programmable gate array, FPGA), or a combination of at least two of these types of integrated circuits. For another example, when the unit in the apparatus may be implemented by scheduling a program by a processing element, the processing element may be a general purpose processor, for example, a central processing unit (central processing unit, CPU) or another processor that can invoke the program. For another example, the units may be integrated and implemented in a form of a system-on-a-chip (system-on-a-chip, SOC).

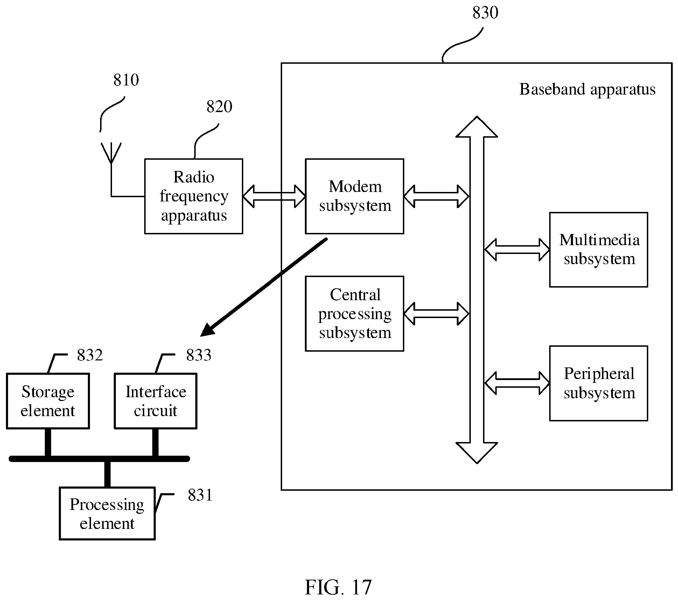

FIG. 17 is a schematic structural diagram of a terminal device according to an embodiment of this application. The terminal device may be the terminal device in the foregoing embodiments and is configured to implement the operations of the terminal device in the foregoing embodiments. As shown in FIG. 17, the terminal device includes an antenna 810, a radio frequency apparatus 820, and a baseband apparatus 830. The antenna 810 is connected to the radio frequency apparatus 820. In a downlink direction, the radio frequency apparatus 820 receives, through the antenna 810, information sent by a network device, and sends, to the baseband apparatus 830 for processing, the information sent by the network device. In an uplink direction, the baseband apparatus 830 processes information of the terminal device, and sends the information to the radio frequency apparatus 820; and the radio frequency apparatus 820 processes the information of the terminal device, and then sends the processed information to the network device through the antenna 810.

The baseband apparatus 830 may include a modem subsystem, configured to process data at each communication protocol layer. The baseband apparatus 830 may further include a central processing subsystem, configured to implement processing on an operating system and an application layer of the terminal. In addition, the baseband apparatus 830 may further include another subsystem, for example, a multimedia subsystem or a peripheral subsystem. The multimedia subsystem is configured to control a camera, screen display, and the like of the terminal device, and the peripheral subsystem is configured to implement a connection to another device. The modem subsystem may be an independent chip. Optionally, the foregoing apparatus used for the terminal may be located in the modem subsystem.

The modem subsystem may include one or more processing elements 831, for example, include a main control CPU and another integrated circuit. In addition, the modem subsystem may further include a storage element 832 and an interface circuit 833. The storage element 832 is configured to store data and a program, but a program used to perform the method performed by the terminal device in the foregoing methods may not be stored in the storage element 832, but is stored in a memory outside the modem subsystem. The interface circuit 833 is configured to communicate with another subsystem. The foregoing apparatus used for the terminal device may be located in the modem subsystem, and the modem subsystem may be implemented by using a chip. The chip includes at least one processing element and an interface circuit. The processing element is configured to perform the steps of any one of the methods performed by the terminal device. The interface circuit is configured to communicate with another apparatus. In an implementation, units of the terminal device that implement the steps in the foregoing methods may be implemented by scheduling a program by a processing element. For example, the apparatus used for the terminal device includes a processing element and a storage element. The processing element invokes a program stored in the storage element, to perform the methods performed by the terminal in the foregoing method embodiments. The storage element may be a storage element located on a same chip as the processing element, in other words, is an on-chip storage element.

In another implementation, the program used to perform the methods performed by the terminal device in the foregoing methods may be in a storage element located on a different chip from the processing element, in other words, in an off-chip storage element. In this case, the processing element invokes or loads the program from the off-chip storage element to an on-chip storage element, to invoke and perform the methods performed by the terminal in the foregoing method embodiments.

In still another implementation, units of the terminal device that implement the steps in the foregoing methods may be configured as one or more processing elements. These processing elements are disposed in the modem subsystem. The processing element herein may be an integrated circuit, for example, one or more ASICs, one or more DSPs, one or more FPGAs, or a combination of these types of integrated circuits. The integrated circuits may be integrated together to form a chip.

The units of the terminal device that implement the steps in the foregoing methods may be integrated together, and implemented in a form of a system-on-a-chip (system-on-a-chip, SOC). The SOC chip is configured to implement the foregoing methods.

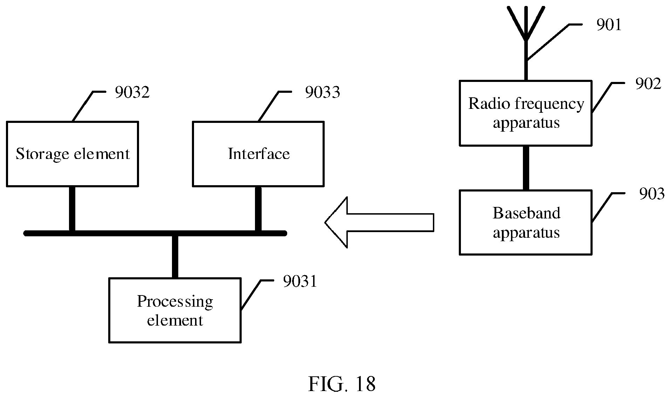

FIG. 18 is a schematic structural diagram of a network device according to an embodiment of this application. The network device is configured to implement the operations of the network device in the foregoing embodiments. As shown in FIG. 18, the network device includes an antenna 901, a radio frequency apparatus 902, and a baseband apparatus 903. The antenna 901 is connected to the radio frequency apparatus 902. In an uplink direction, the radio frequency apparatus 902 receives, through the antenna 901, information sent by a terminal, and sends, to the baseband apparatus 903 for processing, the information sent by the terminal device.

In a downlink direction, the baseband apparatus 903 processes information of the terminal, and sends the information to the radio frequency apparatus 902. The radio frequency apparatus 902 processes the information of the terminal device, and then sends the processed information to the terminal through the antenna 901.

The baseband apparatus 903 may include one or more processing elements 9031, for example, include a main control CPU and another integrated circuit. In addition, the baseband apparatus 903 may further include a storage element 9032 and an interface 9033. The storage element 9032 is configured to store a program and data. The interface 9033 is configured to exchange information with the radio frequency apparatus 902, and the interface is, for example, a common public radio interface (common public radio interface, CPRI). The foregoing apparatus used for the network device may be located in the baseband apparatus 903. For example, the foregoing apparatus used for the network device may be a chip in the baseband apparatus 903. The chip includes at least one processing element and an interface circuit. The processing element is configured to perform the steps of any one of the methods performed by the network device. The interface circuit is configured to communicate with another apparatus. In an implementation, units of the network device that implement the steps in the foregoing methods may be implemented by scheduling a program by a processing element. For example, the apparatus used for the network device includes a processing element and a storage element. The processing element invokes a program stored in the storage element, to perform the methods performed by the network device in the foregoing method embodiments. The storage element may be a storage element located on a same chip as the processing element, in other words, is an on-chip storage element, or may be a storage element located on a different chip from the processing element, in other words, is an off-chip storage element.

In another implementation, units of the network device that implement the steps in the foregoing methods may be configured as one or more processing elements. The processing elements are disposed on the baseband apparatus. The processing element herein may be an integrated circuit, for example, one or more ASICs, one or more DSPs, one or more FPGAs, or a combination of these types of integrated circuits. The integrated circuits may be integrated together to form a chip.

The units of the network device that implement the steps in the foregoing methods may be integrated together, and implemented in a form of a system-on-a-chip. For example, the baseband apparatus includes the SOC chip, configured to implement the foregoing methods.

The terminal device and the network device in the foregoing apparatus embodiments may exactly correspond to the terminal device or the network device in the method embodiments, and a corresponding module or unit performs a corresponding step. For example, when the apparatus is implemented in a form of a chip, the receiving unit may be an interface circuit that is of the chip and that is configured to receive a signal from another chip or apparatus. The foregoing sending unit is an interface circuit of the apparatus, and is configured to send a signal to another apparatus. For example, when the apparatus is implemented by a chip, the sending unit is an interface circuit that is of the chip and that is configured to send a signal to another chip or apparatus.

An embodiment of this application further provides a communication system. The communication system includes the foregoing terminal device and the foregoing network device.

An embodiment of this application further provides a computer-readable medium, configured to store computer program code. The computer program includes instructions used to perform the feedback information determining method in the embodiments of this application in the method 200 and the method 300. The readable medium may be a read-only memory (read-only memory, ROM) or a random access memory (random access memory, RAM). This is not limited in this embodiment of this application.

This application further provides a computer program product. The computer program product includes instructions. When the instructions are executed, the terminal device and the network device are enabled to perform operations corresponding to the terminal device and the network device in the foregoing methods.

An embodiment of this application further provides a system chip. The system chip includes a processing unit and a communication unit. The processing unit may be, for example, a processor, and the communication unit may be, for example, an input/output interface, a pin. or a circuit. The processing unit may execute computer instructions, so that a chip in the communication apparatus performs any data transmission method provided in the foregoing embodiments of this application.

Optionally, the computer instructions are stored in a storage unit.

Optionally, the storage unit is a storage unit in the chip, for example, a register or a cache; or the storage unit may be a storage unit in a terminal but outside the chip, for example, a read-only memory (read-only memory, ROM), another type of static storage device capable of storing static information and instructions, or a random access memory (random access memory, RAM). The processor mentioned in any of the foregoing descriptions may be a CPU, a microprocessor, an ASIC, or one or more integrated circuits for controlling program execution of the foregoing feedback information transmission method. The processing unit and the storage unit may be decoupled, separately disposed on different physical devices, and connected in a wired or wireless manner to implement respective functions of the processing unit and the storage unit, to support the system chip in implementing various functions in the foregoing embodiments. Alternatively, the processing unit and the memory may be coupled to a same device.

It may be understood that the memory in the embodiments of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM and is used as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM). and a direct rambus random access memory (direct rambus RAM, DR RAM).

The terms "system" and "network" may be used interchangeably in this specification. The term "and/or" in this specification describes only an association relationship for associated objects and represents that three relationships may exist. For example, A and/or B may represent the following three cases: Only A exists, both A and B exist, and only B exists. In addition, the character "/" in this specification generally indicates an "or" relationship between the associated objects.

The terms "uplink" and "downlink" in this application are used to describe a data/information transmission direction in a specific scenario. For example, an "uplink" direction is usually a direction in which data/information is transmitted from a terminal to a network side, or a direction in which data/information is transmitted from a distributed unit to a centralized unit, and a "downlink" direction is usually a direction in which data/information is transmitted from a network side to a terminal, or a direction in which data/information is transmitted from a centralized unit to a distributed unit. It may be understood that the terms "uplink" and the "downlink" are only used to describe transmission directions of data/information, and neither a specific start device nor a specific end device of the data/information transmission is limited.

Names may be assigned to various objects that may appear in this application, for example, various messages/information/devices/network elements/systems/apparatuses/actions/operations/procedures/concepts. It may be understood that these specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

All or some of the methods in the embodiments of this application may be implemented by software, hardware, firmware, or any combination thereof. When software is used to implement the methods, all or a part of the methods may be implemented in a form of a computer program product. The computer program product includes one or more computer programs or instructions. When the computer programs or the instructions are loaded and executed on a computer, all or some of procedures or functions in the embodiments of this application are performed. The computer may be a general-purpose computer, a special-purpose computer, a computer network, or another programmable apparatus. The computer programs or instructions may be stored in a computer-readable storage medium, or may be transmitted via the computer-readable storage medium. The computer-readable storage medium may be any usable medium accessible by a computer, or a data storage device, such as a server integrating one or more usable media.

It can be clearly understood by a person skilled in the art that, for the purpose of convenient and brief description, for a detailed working process of the described system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely division into logical functions and may be other division during actual implementation. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The storage medium includes any medium that can store program code, such as a USB flash drive, a removable hard disk drive, a read-only memory (read-only memory, ROM), a random access memory (random access memory, RAM), a magnetic disk, or an optical disc.

The scope of protection of the invention is defined in the appended set of claims.

**Claims**

1. A feedback information determining method, performed by a terminal device, comprising:

   determining (S210) N first time domain resources in a first time unit based on a periodicity of a physical downlink shared channel, PDSCH, wherein a part or all of the N first time domain resources are used to receive the PDSCH, and N is a positive integer higher than 1; and transmitting (S220), based on the N first time domain resources, a hybrid automatic repeat request acknowledgement, HARQ-ACK, codebook corresponding to the first time unit, wherein the HARQ-ACK codebook comprises feedback information corresponding to the N first time domain resources;

   wherein the N first time domain resources comprise M second time domain resources, which are all possible time-frequency resources that can be used to receive the PDSCH, the first time unit comprises preconfigured or predefined S third time domain resources, and the S third time domain resources are used to receive the PDSCH; and the determining N first time domain resources in a first time unit based on a periodicity of a PDSCH comprises:

   determining (S211, 213) the M second time domain resources in the first time unit based on the S third time domain resources and the periodicity of the PDSCH; and determining (S212, 214) the N first time domain resources based on the M second time domain resources;

   wherein the first time unit comprises the preconfigured or predefined S third time domain resources, and the N first time domain resources are the sum of the M second time domain resources and the S third time domain resources; and wherein the S third time domain resources represent a number of rows of a time domain table in the configuration information received from a higher layer.

2. The method according to claim 1, wherein the N first time domain resources in the first time unit are consecutive but do not overlap, and the HARQ_ACK codebook corresponding to the first time unit comprises N bits, wherein $N = \lceil L/R \rceil$ or

   $N = \lceil L/R \rceil - 1$, L is a quantity of consecutive symbols in the first time unit, R is the periodicity of the PDSCH, the N bits correspond to the N first time domain resources, and the 1st bit in the N bits is used to send feedback information corresponding to the 1st time domain resource in the N first time domain resources.

3. A feedback information determining method, performed by a network device, comprising:

   determining (S210) N first time domain resources in a first time unit based on a periodicity of a physical downlink shared channel, PDSCH, wherein a part or all of the N first time domain resources are used to send the PDSCH, and N is a positive integer higher than 1; and receiving (S220) a HARQ-ACK codebook corresponding to the first time unit, wherein the HARQ-ACK codebook comprises feedback information corresponding to the N first time domain resources;

   wherein the N first time domain resources comprise M second time domain resources, which are all possible time-frequency resources that can be used to receive the PDSCH, the first time unit comprises preconfigured or predefined S third time domain resources, and the S third time domain resources are used to send the PDSCH; and the determining N first time domain resources in a first time unit based on a periodicity of a PDSCH comprises:

   determining the M second time domain resources in the first time unit based on the S third time domain resources and the periodicity of the PDSCH; and determining the N first time domain resources based on the M second time domain resources;

   wherein the first time unit comprises the preconfigured or predefined S third time domain resources, and the N first time domain resources are the sum of the M second time domain resources and the S third time domain resources: and
wherein the S third time domain resources represent a number of rows of a time domain table in the configuration information sent by a higher layer.

4. The method according to claim 3, wherein the N first time domain resources in the first time unit are consecutive but do not overlap, and the HARQ_ACK codebook corresponding to the first time unit comprises N bits, wherein $N = \lceil L/R \rceil$ or $N = \lceil L/R \rceil - 1$, L is a quantity of consecutive symbols in the first time unit, R is the periodicity of the PDSCH, the N bits correspond to the N first time domain resources, and the $1^{st}$ bit in the N bits is used to send feedback information corresponding to the $1^{st}$ time domain resource in the N first time domain resources.

5. A terminal device (400, 500), comprising a module configured to perform the method according to any one of claims 1 to 2.

6. A network device (600, 700), comprising a module configured to perform the method according to any one of claims 3 to 4.

**Patentansprüche**

1. Verfahren zur Bestimmung von Rückkopplungsinformationen, das durch ein Endgerät durchgeführt wird, umfassend:

Bestimmen (S210) N erster Zeitbereichsressourcen in einer ersten Zeiteinheit basierend auf einer Periodizität eines gemeinsam genutzten physischen Downlink-Kanals, PDSCH, wobei ein Teil oder alle der N ersten Zeitbereichsressourcen verwendet werden, um den PDSCH zu empfangen, und N eine positive ganze Zahl größer als 1 ist; und
Übertragen (S220), basierend auf den N ersten Zeitbereichsressourcen, eines hybriden automatischen Wiederholungsanforderungsbestätigungs-, HARQ-ACK-, Codebuchs entsprechend der ersten Zeiteinheit, wobei das HARQ-ACK-Codebuch Rückkopplungsinformationen entsprechend den N ersten Zeitbereichsressourcen umfasst;
wobei die N ersten Zeitbereichsressourcen M zweite Zeitbereichsressourcen umfassen, die alle möglichen Zeitfrequenzressourcen sind, die zum Empfang des PDSCH verwendet werden können, die erste Zeiteinheit vorkonfigurierte oder vordefinierte S dritte Zeitbereichsressourcen umfasst und die S dritten Zeitbereichsressourcen zum Empfangen des PDSCH verwendet werden; und
das Bestimmen N erster Zeitbereichsressourcen in einer ersten Zeiteinheit basierend auf einer Periodizität eines PDSCH Folgendes umfasst:

Bestimmen (S211, 213) der M zweiten Zeitbereichsressourcen in der ersten Zeiteinheit basierend auf den S dritten Zeitbereichsressourcen und der Periodizität des PDSCH; und
Bestimmen (S212, 214) der N ersten Zeitbereichsressourcen basierend auf den M zweiten Zeitbereichsressourcen;
wobei die erste Zeiteinheit die vorkonfigurierten oder vordefinierten S dritten Zeitbereichsressourcen umfasst und die N ersten Zeitbereichsressourcen die Summe der M zweiten Zeitbereichsressourcen und der S dritten Zeitbereichsressourcen sind; und
wobei die S dritten Zeitbereichsressourcen eine Anzahl von Zeilen einer Zeitbereichstabelle in den von einer höheren Schicht empfangenen Konfigurationsinformationen darstellen.

2. Verfahren nach Anspruch 1, wobei die N ersten Zeitbereichsressourcen in der ersten Zeiteinheit aufeinander folgen, sich aber nicht überlappen, und das HARQ_ACK-Codebuch, das der ersten Zeiteinheit entspricht, N Bits umfasst, wobei $N = \lceil L/R \rceil$ oder $N = \lceil L/R \rceil - 1$, L eine Menge aufeinander folgender Symbole in der ersten Zeiteinheit ist, R die Periodizität des PDSCH ist, die N Bits den N ersten Zeitbereichsressourcen entsprechen und das 1. Bit in den N Bits verwendet wird, um Rückkopplungsinformationen zu senden, die der 1. Zeitbereichsressource in den N ersten Zeitbereichsressourcen entsprechen.

3. Verfahren zur Bestimmung von Rückkopplungsinformationen, das durch eine Netzwerkeinrichtung durchgeführt wird, umfassend:

Bestimmen (S210) N erster Zeitbereichsressourcen in einer ersten Zeiteinheit basierend auf einer Periodizität eines gemeinsam genutzten physischen Downlink-Kanals, PDSCH, wobei ein Teil oder alle der N ersten Zeitbereichsressourcen verwendet werden, um den PDSCH zu senden, und N eine positive ganze Zahl größer als 1 ist; und
Empfangen (S220) eines HARQ-ACK-Codebuchs entsprechend der ersten Zeiteinheit, wobei das HARQ-ACK-Codebuch Rückkopplungsinformationen entsprechend den N ersten Zeitbereichsressourcen umfasst;

wobei die N ersten Zeitbereichsressourcen M zweite Zeitbereichsressourcen umfassen, die alle möglichen Zeitfrequenzressourcen sind, die zum Empfangen des PDSCH verwendet werden können, die erste Zeiteinheit vorkonfigurierte oder vordefinierte S dritte Zeitbereichsressourcen umfasst und die S dritten Zeitbereichsressourcen zum Senden des PDSCH verwendet werden; und

das Bestimmen N erster Zeitbereichsressourcen in einer ersten Zeiteinheit basierend auf einer Periodizität eines PDSCH Folgendes umfasst:

Bestimmen der M zweiten Zeitbereichsressourcen in der ersten Zeiteinheit basierend auf den S dritten Zeitbereichsressourcen und der Periodizität des PDSCH; und Bestimmen der N ersten Zeitbereichsressourcen basierend auf den M zweiten Zeitbereichsressourcen;

wobei die erste Zeiteinheit die vorkonfigurierten oder vordefinierten S dritten Zeitbereichsressourcen umfasst und die N ersten Zeitbereichsressourcen die Summe der M zweiten Zeitbereichsressourcen und der S dritten Zeitbereichsressourcen sind: und

wobei die S dritten Zeitbereichsressourcen eine Anzahl von Zeilen einer Zeitbereichstabelle in den durch eine höhere Schicht gesendeten Konfigurationsinformationen darstellen.

4. Verfahren nach Anspruch 3, wobei
die N ersten Zeitbereichsressourcen in der ersten Zeiteinheit aufeinander folgen, sich aber nicht überlappen, und das HARQ_ACK-Codebuch, das der ersten Zeiteinheit entspricht, N Bits umfasst, wobei

$$N = \lceil L/R \rceil \quad \text{oder} \quad N = \lceil L/R \rceil - 1 \, ,$$ L eine Menge aufeinander folgender Symbole in der ersten Zeiteinheit ist, R die Periodizität des PDSCH ist, die N Bits den N ersten Zeitbereichsressourcen entsprechen und das 1. Bit in den N Bits verwendet wird, um Rückkopplungsinformationen zu senden, die der 1. Zeitbereichsressource in den N ersten Zeitbereichsressourcen entsprechen.

5. Endgerät (400, 500), umfassend ein Modul, das dazu konfiguriert ist, das Verfahren nach einem der Ansprüche 1 bis 2 durchzuführen.

6. Netzwerkeinrichtung (600, 700), umfassend ein Modul, das dazu konfiguriert ist, das Verfahren nach einem der Ansprüche 3 bis 4 durchzuführen.

**Revendications**

1. Procédé de détermination d'informations de rétroaction, réalisé par un dispositif terminal, comprenant :

la détermination (S210) de N premières ressources du domaine temporel dans une première unité de temps basée sur une périodicité d'un canal physique partagé de liaison descendante, PDSCH, dans lequel une partie ou la totalité des N premières ressources du domaine temporel sont utilisées pour recevoir le PDSCH, et N est un entier positif supérieur à 1 ; et

la transmission (S220), basée sur les N premières ressources du domaine temporel, d'un livre de codes d'accusé de réception de requête de répétition automatique hybride, HARQ-ACK, correspondant à la première unité de temps, dans lequel le livre de codes HARQ-ACK comprend des informations de rétroaction correspondant aux N premières ressources du domaine temporel ;

dans lequel les N premières ressources du domaine temporel comprennent M secondes ressources du domaine temporel, qui sont toutes les ressources temps-fréquence possibles pouvant être utilisées pour recevoir le PDSCH, la première unité de temps comprend S troisièmes ressources du domaine temporel préconfigurées ou prédéfinies, et les S troisièmes ressources du domaine temporel sont utilisées pour recevoir le PDSCH ; et

la détermination de N premières ressources du domaine temporel dans une première unité de temps, basée sur la périodicité d'un PDSCH, comprend :

la détermination (S211, 213) de M secondes ressources du domaine temporel dans la première unité de temps basée sur les S troisièmes ressources du domaine temporel et de la périodicité du PDSCH ; et la détermination (S212, 214) de N premières ressources du domaine temporel basée sur les M secondes ressources du domaine temporel ; dans lequel la première unité de temps comprend les S troisièmes ressources préconfigurées ou prédéfinies du domaine temporel, et les N premières ressources du domaine temporel sont la somme des M secondes ressources du domaine temporel et des S troisièmes ressources du domaine temporel ; et

dans lequel les S troisièmes ressources du domaine temporel représentent un nombre de lignes d'une table de domaine temporel dans les informations de configuration reçues d'une couche supérieure.

**2.** Procédé selon la revendication 1, dans lequel les N premières ressources du domaine temporel de la première unité de temps sont consécutives mais ne se chevauchent pas, et le livre de codes HARQ_ACK correspondant à la première unité de temps comprend N bits, dans lequel $N = \lceil L/R \rceil$ ou $N = \lceil L/R \rceil - 1$, L est une quantité de symboles consécutifs dans la première unité de temps, R est la périodicité du PDSCH, les N bits correspondent aux N premières ressources du domaine temporel, et le 1$^{er}$ bit des N bits est utilisé pour envoyer des informations de retour correspondant à la 1$^{ère}$ ressource du domaine temporel dans les N premières ressources du domaine temporel.

**3.** Procédé de détermination d'informations de rétroaction, réalisé par un dispositif réseau, comprenant :

la détermination (S210) de N premières ressources du domaine temporel dans une première unité de temps basée sur une périodicité d'un canal physique partagé de liaison descendante, PDSCH, dans lequel une partie ou la totalité des N premières ressources du domaine temporel sont utilisées pour envoyer le PDSCH, et N est un entier positif supérieur à 1 ; et

la réception (S220) d'un livre de codes HARQ-ACK correspondant à la première unité de temps, dans lequel le livre de codes HARQ-ACK comprend des informations de rétroaction correspondant aux N premières ressources du domaine temporel ;

dans lequel les N premières ressources du domaine temporel comprennent M secondes ressources du domaine temporel, qui sont toutes les ressources temps-fréquence possibles pouvant être utilisées pour recevoir le PDSCH, la première unité de temps comprend S troisièmes ressources du domaine temporel préconfigurées ou prédéfinies, et les S troisièmes ressources du domaine temporel sont utilisées pour envoyer le PDSCH ; et

la détermination de N premières ressources du domaine temporel dans une première unité de temps, basée sur la périodicité d'un PDSCH, comprend :

la détermination de M secondes ressources du domaine temporel dans la première unité de temps basée sur les S troisièmes ressources du domaine temporel et de la périodicité du PDSCH ; et la détermination de N premières ressources du domaine temporel basées sur les M secondes ressources du domaine temporel ;

dans lequel la première unité de temps comprend les S troisièmes ressources préconfigurées ou prédéfinies du domaine temporel, et les N premières ressources du domaine temporel sont la somme des M secondes ressources du domaine temporel et des S troisièmes ressources du domaine temporel : et

dans lequel les troisièmes ressources du domaine temporel S représentent un nombre de lignes d'une table de domaine temporel dans les informations de configuration envoyées par une couche supérieure.

**4.** Procédé selon la revendication 3, dans lequel les N premières ressources du domaine temporel de la première unité de temps sont consécutives mais ne se chevauchent pas, et le livre de codes HARQ_ACK correspondant à la première unité de temps comprend N bits, dans lequel $N = \lceil L/R \rceil$ ou $N = \lceil L/R \rceil - 1$, L est une quantité de symboles consécutifs dans la première unité de temps, R est la périodicité du PDSCH, les N bits correspondent aux N premières ressources du domaine temporel, et le 1$^{er}$ bit des N bits est utilisé pour envoyer des informations de retour correspondant à la 1$^{ère}$ ressource du domaine temporel dans les N premières ressources du domaine temporel.

**5.** Dispositif terminal (400, 500), comprenant un module configuré pour réaliser le procédé selon l'une quelconque des revendications 1 à 2.

**6.** Dispositif réseau (600, 700), comprenant un module configuré pour réaliser le procédé selon l'une quelconque des revendications 3 à 4.

FIG. 1

EP 3 937 405 B1

Downlink

Downlink slot number | | i–4 | i–3 | i–2 | i–1 | i | | |

Uplink slot number | | i–4 | i–3 | i–2 | i–1 | i | i+1 | i+2 | i+3 |

Uplink

FIG. 2

| Symbol number | 0 | 1 | 2 | 3 | 4 | 5 | 6 | 7 | 8 | 9 | 10 | 11 | 12 | 13 |
|---|---|---|---|---|---|---|---|---|---|---|---|---|---|---|

First group of PDSCH candidate occasions

First group of PDSCH candidate occasions

Third group of PDSCH candidate occasions

Fourth group of PDSCH candidate occasions

FIG. 3

New time-frequency resource

First group of PDSCH candidate occasions

First group of PDSCH candidate occasions

Third group of PDSCH candidate occasions

Transmission symbols of an SPS PDSCH

FIG. 4

EP 3 937 405 B1

| Network device | | Terminal device |
| --- | --- | --- |

S210. Determine N first time domain resources in a first time unit based on a periodicity of a PDSCH, where the N first time domain resources are used by the terminal device to receive the PDSCH, or the N first time domain resources are used by the network device to send the PDSCH, and N is a positive integer

S220. Determine, based on the N first time domain resources, a hybrid automatic repeat request acknowledgement HARQ_ACK codebook corresponding to the first time unit, where the HARQ-ACK codebook includes feedback information corresponding to the N first time domain resources

S230. Send the PDSCH to the terminal device in the first time unit based on the periodicity of the PDSCH

S240. Send the HARQ_ACK codebook to the network device based on the PDSCH

FIG. 5

| Network device | | Terminal device |
| --- | --- | --- |

S211. Determine M second time domain resources in a first time unit based on a time domain resource of the first PDSCH and a periodicity of a PDSCH

S212. Determine N first time domain resources based on the M second time domain resources

S220. Determine, based on the N first time domain resources, a hybrid automatic repeat request acknowledgement HARQ_ACK codebook corresponding to the first time unit, where the HARQ-ACK codebook includes feedback information corresponding to the N first time domain resources

S230. Send the PDSCH to the terminal device in the first time unit based on the periodicity of the PDSCH

S240. Send the HARQ_ACK codebook to the network device based on the PDSCH

FIG. 6

Symbol number | 0 | 1 | 2 | 3 | 4 | 5 | 6 | 7 | 8 | 9 | 10 | 11 | 12 | 13

Time domain resource
of the first PDSCH

FIG. 7

EP 3 937 405 B1

First slot                                        Second slot

Symbol
number   | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

Time domain resource ⊠
of the first PDSCH

FIG. 8

FIG. 9

```
┌─────────────┐                                    ┌─────────────┐
│   Network   │                                    │  Terminal   │
│   device    │                                    │   device    │
└─────────────┘                                    └─────────────┘
```

S213. Determine M second time domain resources in a first time unit based on S third time domain resources and a periodicity of a PDSCH, where the first time unit includes the preconfigured or predefined S third time domain resources, and the S third time domain resources are used to receive the PDSCH

S214. Determine N first time domain resources based on the M second time domain resources

S220. Determine, based on the N first time domain resources, a hybrid automatic repeat request acknowledgement HARQ_ACK codebook corresponding to the first time unit, where the HARQ-ACK codebook includes feedback information corresponding to the N first time domain resources

S230. Send the PDSCH to the terminal device in the first time unit based on the periodicity of the PDSCH

S240. Send the HARQ_ACK codebook to the network device based on the PDSCH

FIG. 10

| | #3 | | | | | | | |
|---|---|---|---|---|---|---|---|---|

#3

#2

#1

#6

#5

#4

| Symbol number | 0 | 1 | 2 | 3 | 4 | 5 | 6 | 7 | 8 | 9 | 10 | 11 | 12 | 13 |
|---|---|---|---|---|---|---|---|---|---|---|---|---|---|---|

FIG. 11

| Network device | | Terminal device |
|---|---|---|

S310. Determine N first time domain resources in a first time unit based on a periodicity of a PDSCH, where the N first time domain resources are used by the terminal device to receive the PDSCH, or the N first time domain resources are used by the network device to send the PDSCH, and N is a positive integer

S320. Determine, based on the N first time domain resources, a hybrid automatic repeat request acknowledgement HARQ_ACK codebook corresponding to the first time unit, where the HARQ-ACK codebook includes feedback information corresponding to the N first time domain resources

S330. Send the PDSCH to the terminal device in the first time unit based on the periodicity of the PDSCH

S340. Send the HARQ_ACK codebook to the network device based on the PDSCH

FIG. 12

Communication apparatus 400

Processing unit 410

Communication unit 420

FIG. 13

Communication apparatus 500

Processor
510

Memory
520

Transceiver
530

FIG. 14

Communication apparatus 600

Processing unit 610

Communication unit 620

FIG. 15

Communication apparatus 700

Processor
710

Memory
720

Transceiver
730

FIG. 16

810

820

830

FIG. 17

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20160278075 A1

- US 20150195072 A1

### Non-patent literature cited in the description

- **OPPO**. Remaining details on HARQ-ACK transmission. *3GPP DRAFT; R1-1806838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 20 May 2018, vol. RAN WG1 (Busan, Korea), http://www.3gpp.org/ftp/Meetings%5F3GPP%5FSYNC/RAN1/Docs
- **LG ELECTRONICS**. Remaining issues on CA and HARQ-ACK codebook. *3GPP DRAFT; R1-1806630 NR CA-AN REMAINING_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 12 May 2018, vol. RAN WG1 (Busan, Korea), http://www.3gpp.org/ftp/tsg%5Fran/WG1%5FRL1/TSGR1%5F93/Docs

- **SHARP**. Remaining issues on HARQ-ACK of SPS PDSCH release. *3GPP DRAFT; R1-1813202, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 11 November 2018, vol. RAN WG1 (Spokane, US), http://www.3gpp.org/ftp/Meetings%SF3GPP%SFSYNC/RAN1/Docs/R1%2D1813202%2Ezip